# EUROPEAN PATENT SPECIFICATION

(11) **EP 3 578 596 B1**
(45) Date of publication and mention of the grant of the patent: **18.11.2026**
(21) Application number: 18748686.5
(22) Date of filing: 02.02.2018
(51) Int. Cl.: C08J 9/04

(54) **FOAM BODY, POLYOLEFIN-BASED FOAM SHEET, AND COMPLEX**
SCHAUMKÖRPER, SCHAUMFOLIE AUF POLYOLEFINBASIS UND KOMPLEX
CORPS EN MOUSSE, FEUILLE EN MOUSSE À BASE DE POLYOLÉFINE ET COMPLEXE

(30) Priority: 14.11.2017 JP 2017219449; 02.02.2017 JP 2017017820
(43) Date of publication of application: 11.12.2019
(73) Proprietor: Mitsui Fine Chemicals, Inc., Tokyo 103-0022 (JP)
(72) Inventor: MATAYOSHI, Tomoya, Sodegaura-shi Chiba 299-0265 (JP); WATANABE ,Takayuki, Sodegaura-shi Chiba 299-0265 (JP); ERIGUCHI, Michio, Sodegaura-shi Chiba 299-0265 (JP); NOMA, Satoshi, Sodegaura-shi Chiba 299-0265 (JP)
(74) Representative: Hoffmann Eitle
(86) International application number: PCT/JP2018/003610
(87) International publication number: WO 2018/143411

(56) References cited:
- EP-A1- 2 497 789
- JP-A- 2000 290 417
- JP-A- 2003 100 265
- JP-A- 2005 145 999
- JP-A- 2007 529 615
- JP-A- 2008 533 276
- JP-A- 2011 228 056
- JP-A- 2014 001 346
- JP-A- 2016 132 692
- JP-A- 2016 132 692
- JP-A- S62 256 836
- JP-A- S62 256 836

## Description

### TECHNICAL FIELD

The present invention relates to a foam body and to a polyolefin-based foam sheet.

### BACKGROUND ART

For example, since a foam body such as a polyolefin-based foam sheet is light in weight and is excellent in heat insulation and flexibility, the foam body is used as, for example, a shock absorbing material, a dish container, a heat insulating material, or an automobile part.

As a technique regarding such a foam body, for example, a technique disclosed in JP-A-2014-084341 may be used.

JP-A-2014-084341discloses a polyolefin-based resin foam body obtained by extrusion-foaming a polyolefin-based resin composition for extrusion foaming including (a) a polyolefin-based resin, and (b) (b1) an elastomer and (b2) a plastomer, in which a mixing ratio of (a) and (b) is in a range of 90/10 to 10/90 by mass ratio, and a mixing ratio of (b1) and (b2) is in a range of 90/10 to 10/90 by mass ratio.

JP-A-S62-256836 discloses a 4-methyl-1-pentene-based copolymer having a 4-methyl-1-pentene content of 40-80mol%, a melting point of 140-220°C, a softening point of 90-190°C and a degree of crystallinity of 15-35% as determined by X-ray diffractometry, and which is a random of 4-methyl-1-pentene with C₃₋₇-(α-olefin) other than 4-methyl-1-pentene, and which is suitable as a material for e.g. a bottle cap and has elasticity and excellent heat resistance.

### SUMMARY OF THE INVENTION

### TECHNICAL PROBLEM

Generally, although a foam body is excellent in flexibility, the foam body cannot retain its shape in a case of changing the shape and is inferior in shape retainability and shape followability. Therefore, a member that is excellent in flexibility, shape retainability, and shape followability is not known.

In addition, generally, although a polyolefin-based foam sheet is excellent in flexibility, the foam sheet cannot retain its shape in a case of changing the shape and is inferior in shape retainability and shape followability. Therefore, a polyolefin-based foam sheet which is excellent in flexibility, shape retainability, and shape followability is not known.

The invention of the present application is made in view of the above-mentioned circumstances and provides a foam body (first aspect of the invention) and a polyolefin-based foam sheet (second aspect of the invention) which are excellent in performance balance of flexibility, shape retainability, and shape followability.

### SOLUTION TO PROBLEM

The present inventors have conducted intensive investigations to realize a member excellent in flexibility, shape retainability, and shape followability. As a result, it has been found for the first time that a foam body showing a relatively high loss tangent (tan δ) in a range of 10-100°C is excellent in performance balance of flexibility, shape retainability, and shape followability. As a result of conducting further intensive investigations by the present inventors based on the above-mentioned finding, the present inventors have found that it is possible to improve the performance balance of flexibility, shape retainability, and shape followability in the foam body constituted of a 4-methyl-1-pentene-based polymer by adjusting the temperature showing the maximum value of loss tangent (tan δ) and the maximum value of the loss tangent to specific ranges, and thus completed the first aspect of the present application.

Moreover, the present inventors have conducted intensive investigations to achieve the object regarding the second aspect of the present application. As a result, the present inventors have found that it is possible to improve the performance balance of flexibility, shape retainability, and shape followability in a polyolefin-based foam sheet using a 4-methyl-1-pentene-based polymer by setting a difference between a Shore A hardness immediately after measurement and a Shore A hardness after a certain period of time has passed since the measurement to be in a specific range, and thus completed the second aspect of the present application.

That is, the present invention provides an uncrosslinked foam body comprising a 4-methyl-1-pentene-based polymer including constitutional units derived from (i) 4-methyl-1-pentene and (ii) C₂₋₃- (α-olefin), with the content of the units (i) in the polymer being 10-90 mol%, based on the total of the units (i) and (ii), wherein one or more temperatures showing a maximum value of loss tangent (tan δ), obtained by dynamic viscoelasticity measurement at a temperature increase rate of 4°C/min, a frequency of 1.59 Hz, and a distortion of 0.1%, exist in at least a range of 10-100°C, and the maximum value of the loss tangent is 0.5-3.5.

Furthermore, the present invention provides a foam sheet, which
- is an uncrosslinked sheet and
- is a polyolefin-based foam sheet comprising a 4-methyl-1-pentene-based polymer including constitutional units derived from (i) 4-methyl-1-pentene and (ii) C₂₋₃-(α-olefin), the content of the units (i) being 10-90 mol% based on the total of the units (i) and (ii);
wherein ΔHS expressed by (HS₀-HS₁) is 30-60, with HS₀ being the Shore A hardness of at least one surface of the polyolefin-based foam sheet immediately after measurement, measured according to JIS K6253 at 23°C, and HS₁ is the Shore A hardness 15 seconds after the measurement.

Preferred emboddiments of the invention are as defined in the appended dependent claims and/or in the following detailed description.

### ADVANTAGEOUS EFFECTS OF INVENTION

According to the present invention, it is possible to realize a foam body and a polyolefin-based foam sheet which are excellent in performance balance of flexibility, shape retainability, and shape followability.

### DESCRIPTION OF EMBODIMENTS

Hereinafter, embodiments of the present invention will be described. Unless otherwise specified, a numerical range "A-B" means ≥ A and ≤ B.

### 1. First Aspect

### <Foam Body (A)>

A foam body (A) according to the invention (the foam body (A)) is an uncrosslinked foam body comprising a 4-methyl-1-pentene-based polymer including constitutional units derived from (i) 4-methyl-1-pentene and (ii) C₂₋₃- (α-olefin), with the content of the units (i) in the polymer being 10-90 mol%, based on the total of the units (i) and (ii),
wherein one or more temperatures showing a maximum value of loss tangent (tan δ), obtained by dynamic viscoelasticity measurement at a temperature increase rate of 4°C/min, a frequency of 1.59 Hz, and a distortion of 0.1%, exist in at least a range of 10-100°C, and the maximum value of the loss tangent is 0.5-3.5.

As described above, generally, although a foam body is excellent in flexibility, the foam body cannot retain its shape in a case of changing the shape and is inferior in shape retainability and shape followability. Therefore, a member that is excellent in flexibility, shape retainability, and shape followability is not known.

The present inventors have conducted intensive investigations to realize a member excellent in flexibility, shape retainability, and shape followability. As a result, it has been found for the first time that a foam body showing a relatively high loss tangent (tan δ) in a range of 10-100°C is excellent in performance balance of flexibility, shape retainability, and shape followability.

As a result of conducting further intensive investigations by the present inventors based on the above-mentioned finding, the present inventors have been found that it is possible to improve the performance balance of flexibility, shape retainability, and shape followability in the foam body constituted of a 4-methyl-1-pentene-based polymer by adjusting the temperature showing the maximum value of the loss tangent (tan δ) and the maximum value of the loss tangent to specific ranges, and thus completed the first aspect of the present application.

Although the reason why the foam body (A) in which the maximum value of the loss tangent in a range of 10-100°C is in the above range is excellent in performance balance of flexibility, shape retainability, and shape followability is not clear, the following reasons can be considered.

First, since a large amount of the mechanical energy given during deformation can be converted to thermal energy, and a large of the energy can be absorbed, the restoration rate of the foam body (A) in which the maximum value of the loss tangent in a range of 10-100°C is in the above range after deformation is considered to be slow. As a result, it is considered that while maintaining the flexibility of the foam body, it is possible to retain the shape after deformation satisfactorily or to follow the deformation satisfactorily.

As mentioned above, according to this embodiment, the member which is excellent in performance balance of flexibility, shape retainability, and shape followability can be realized.

The shape of the foam body (A) is not particularly limited, and examples thereof include a fiber, a monofilament, a strand, a band, a film, a sheet, a hose, a tube, a tape, a flat yarn, a pipe, a sphere, a polyhedron, and a mesh structure. Among these, a film or a sheet is preferable.

Here, in a case where the shape of the foam body (A) is a flat shape such as a band, a film, a sheet, a tape, or a flat yarn, the loss tangent (tan δ) which is obtained by dynamic viscoelasticity measurement can be measured by, for example, cutting the foam body into a test piece having a size of 30 mm length × 10 mm width and using a rheometer under conditions of a frequency of 1.59 Hz, a temperature increase rate of 4 °C/min, a measurement temperature range of 0-110°C, a distortion of 0.1%, and a chuck distance of 20 mm in a twist mode.

In addition in a case where the shape of the foam body (A) is a threadlike shape such as a fiber, a monofilament, or a strand, the loss tangent (tan δ) which is obtained by dynamic viscoelasticity measurement can be measured by, for example, using a rheometer under conditions of a frequency of 1.59 Hz, a temperature increase rate of 4 °C/min, in a measurement temperature range of 0-110°C, and a distortion of 0.1% in a tension mode.

In addition, in a case where the shape of the foam body (A) is a three-dimensional shape such as a hose, a tube, a pipe, a sphere, a polyhedron, or a mesh structure, the loss tangent (tan δ) which is obtained by dynamic viscoelasticity measurement can be measured by, for example, cutting the foam body into a test piece having a predetermined size as required, and using a rheometer under conditions of a frequency of 1.59 Hz, a temperature increase rate of 4 °C/min, a measurement temperature range of 0-110°C, and a distortion of 0.1% in a tension mode or compression mode.

In the embodiment, for example, by appropriately adjusting (1) the kind and the mixing ratio of the 4-methyl-1-pentene-based polymer (a1) constituting the foam body (A), (and (2) a foam molding method, the maximum value of the loss tangent in a range of 10-100°C can be controlled to be in the above range.

Among these, for example, increasing the mixing ratio of the 4-methyl-1-pentene-based polymer (a1) in the foam body (A) may be factors for setting the maximum value of the loss tangent in a range of 10-100°C to the desired numerical range.

The foam body (A) is uncrosslinked from the viewpoint of improving shape retainability and shape followability. That is, the foam body (A) is an uncrosslinked foam body which is not subjected to a crosslinking treatment such as ionizing radiation crosslinking using an electron beam and a γ-ray. Thus, the maximum value of the loss tangent in a range of 10-100°C can be increased and a foam body (A) which is more excellent in shape retainability and shape followability can be obtained.

The density of the foam body (A) is preferably 0.80 g/cm³ or less, more preferably 0.75 g/cm³ or less, still more preferably 0.70 g/cm³ or less, and particularly preferably 0.65 g/cm³ or less. In a case where the density is equal to or less than the upper limit, a lighter foam body (A) can be obtained, the blocking resistance of the foam body (A) can be improved or the smoothness of the surface can be improved, and as a result, the touch feeling can be improved.

In addition, the density of the foam body (A) is preferably 0.10 g/cm³ or more, more preferably 0.20 g/cm³ or more, still more preferably 0.30 g/cm³ or more, and particularly preferably 0.40 g/cm³ or more. In a case where the density is equal to or more than the lower limit, the mechanical properties, such as bending properties and tensile properties, of the foam body (A) can be further improved.

The density of the foam body (A) can be controlled to be in the above range by appropriately controlling, for example, the kind or mixing amount of the 4-methyl-1-pentene-based polymer (a1) or a foamable modified resin (a2) described later, and the expansion ratio of the foam body (A), respectively.

In the foam body (A), the temperature showing the maximum value of the loss tangent (tanδ) of dynamic viscoelasticity is preferably at least one temperature in at least a range of 10-80°C, more preferably 10-60°C, still more preferably 10-50°C, and particularly preferably one temperature in the range of 10-50°C.

In addition, in the foam body (A), the maximum value of the loss tangent is preferably 0.8 or more, more preferably 1.0 or more, and still more preferably 1.2 or more, and is preferably 3.0 or less and more preferably 2.8 or less.

Thus, the performance balance of flexibility, shape retainability, and shape followability of the foam body (A) can be further improved. Here, as the maximum value of the loss tangent increases, the viscous properties of the foam body becomes stronger.

Although the reason why the foam body (A) having strong viscous properties is more excellent in performance balance of flexibility, shape retainability, and shape followability is not clear, the following reasons can be considered.

First, since a larger amount of the mechanical energy given during deformation can be converted to thermal energy, and a larger of the energy can be absorbed, the restoration rate of the foam body (A) having strong viscous properties after deformation is considered to be slower. As a result, it is considered that while maintaining the flexibility of the foam body, it is possible to retain the shape after deformation more satisfactorily or to follow the deformation more satisfactorily.

The thickness of the foam body (A) is not particularly limited and for example, the thickness is in a range of 0.1-30 mm, preferably 0.2-20 mm, and more preferably 0.3-12 mm. In a case where the thickness of the foam body (A) is in this range, the balance of flexibility, shape retainability, shape followability, lightness, mechanical properties, handleability, appearance, moldability, and moisture resistance is more excellent.

Hereinafter, each component constituting the foam body (A) will be described.

### <4-Methyl-1-Pentene-Based Polymer (a1)>

The foam body (A) includes a 4-methyl-1-pentene-based polymer (a1) as an essential component. Thus, the maximum value of the loss tangent (tan δ) can be further increased.

The 4-methyl-1-pentene-based polymer (a1) is a 4-methyl-1-pentene·α-olefin copolymer (c) including a constitutional unit (c1) derived from 4-methyl-1-pentene, and a constitutional unit (c2) derived from a C₂₋₃-(α-olefin).

In the 4-methyl-1-pentene·α-olefin copolymer (c), from the viewpoint of further improving the flexibility of the foam body (A), when the total of the constitutional units (c1) and (c2) is 100 mol%, the content of the constitutional unit (c1) is 10-90 mol% and the content of the constitutional unit (c2) is 10-90 mol%.

In addition, in the 4-methyl-1-pentene·α-olefin copolymer (c), from the viewpoint of further improving the flexibility and the mechanical properties of the foam body (A), when the total of the constitutional unit (c1) and the constitutional unit (c2) is 100 mol%, it is preferable that the content of the constitutional unit (c1) is 30-90 mol%, and the content of the constitutional unit (c2) is 10-70 mol%, it is more preferable that the content of the constitutional unit (c1) is 50-90 mol%, and the content of the constitutional unit (c2) is 10-50 mol%, it is still more preferable that the content of the constitutional unit (c1) is 60-90 mol%, and the content of the constitutional unit (c2) is 10-40 mol%, and it is particularly preferable that the content of the constitutional unit (c1) is 65-90 mol%, and the content of the constitutional unit (c2) is 10-35 mol%.

Examples of the C₂₋₃-(α-olefin) which is used for the 4-methyl-1-pentene ·α-olefin copolymer (c) include a linear α-olefin and a functionalized vinyl compound, and a linear α-olefin is preferable.

Examples of the C₂₋₃-(α-olefin) include ethylene and propylene.

Examples of the functionalized vinyl compound include hydroxyl group-containing olefins; halogenated olefins; and unsaturated carboxylic acids such as (meth) acrylic acid, acid halide, allylamine and ethylenically unsaturated silane compounds.

These C₂₋₃-(α-olefins) may be used alone or in combination of two or more thereof. Among these, ethylene and propylene are suitable, and propylene is particularly preferably used from the viewpoint of being capable of further improving flexibility.

The 4-methyl-1-pentene ·α-olefin copolymer (c) may include other constitutional units in addition to the constitutional units (c1) and (c2) within the range not impairing the object of the present invention. Other constitutions include constitutional units derived from non-conjugated polyenes.

Examples of the non-conjugated polyene include linear or branched cyclic dienes having preferably 5-20, more preferably 5-10, carbon atoms, various norbornes, and norbornadienes. Among these, 5-vinylidene-2-norbornene and 5-ethylidene-2-norbornene are preferable.

The intrinsic viscosity [η] of the 4-methyl-1-pentene-based polymer according to the embodiment at 135°C in decalin is preferably 0.01-5.0 dL/g, more preferably 0.1-4.0 dL/g, still more preferably 0.5-3.0 dL/g, and particularly preferably 1.0-2.8 dL/g from the viewpoint of further improving the flexibility and the mechanical strength of the foam body (A).

The density of the 4-methyl-1-pentene-based polymer t measured according to ASTM D 1505 (water substitution) is preferably 0.810-0.850 g/cm³, more preferably 0.820-0.850 g/cm³, and still more preferably 0.830-0.850 g/cm³.

The 4-methyl-1-pentene-based polymer can be produced by various methods. For example, it can be produced using known catalysts such as magnesium-supported titanium catalysts; metallocene catalysts described in WO 01/53369, WO 01/027124, JP-A-H03-193796, and JP-A-H02-41303; and metallocene compound-containing olefin polymerization catalysts described in WO 2011/055803.

The content of the 4-methyl-1-pentene-based polymer (a1) in the foam body (A) is not particularly limited. When the entire foam body (A) is 100 mass%, the content of the 4-methyl-1-pentene-based polymer is preferably 50 mass% or more, more preferably 60 mass% or more, still more preferably 65 mass% or more, even still more preferably 70 mass% or more, and particularly preferably 75 mass% or more, and is preferably 100 mass% or less, more preferably 99.5 mass% or less, still more preferably 99 mass% or less, even still more preferably 98 mass% or less, and particularly preferably 97 mass% or less.

Thus, it is possible to obtain a foam body (A) which is more excellent in balance of flexibility, shape retainability, shape followability, lightness, mechanical properties, handleability, appearance, moldability, and moisture resistance.

### <Foamable Modified Resin (a2)>

The foam body (A) preferably contains the foamable modified resin (a2) (however, excluding the 4-methyl-1-pentene-based polymer (a1)) from the viewpoint of further improving appearance, a touch feeling, and foamability (for example, expansion ratio, cell density).

The foamable modified resin (a2) is not particularly limited as long as the resin improves the foamability of the foam body (A). For example, at least one selected from thermoplastic resins, thermoplastic elastomers, and rubbers is preferable.

Examples of the thermoplastic resins (however, excluding the 4-methyl-1-pentene-based polymer (a1)) include thermoplastic polyolefin resins such as low density polyethylene, medium density polyethylene, high density polyethylene, high pressure low density polyethylene, polypropylene, poly 1-butene, poly 4-methyl-1-pentene, poly 3-methyl-1-butene, ethylene·α-olefin copolymers, propylene·α-olefin copolymers, 1-butene·α-olefin copolymers, cyclic olefin copolymers, and chlorinated polyolefin; thermoplastic polyamide-based resins such as aliphatic polyamides (such as nylon 6, nylon 11, nylon 12, nylon 66, nylon 610, and nylon 612), and polyether block amide copolymers; thermoplastic polyester-based resins such as polyethylene terephthalate and polybutylene terephthalate; thermoplastic vinyl aromatic resins such as polystyrene, ABS resin, and AS resin; vinyl chloride resin; vinylidene chloride resin; acryl resin; ethylene·vinyl acetate copolymers; ethylene·methacrylic acid acrylate copolymer; ionomers; ethylene·vinyl alcohol copolymers; polyvinyl alcohols; fluorine-based resins such as polyvinyl fluoride resin, polytetrafluoroethylene, polyvinylidene fluoride, and ETFE; polycarbonates; polyacetals; polyphenylene oxides; polyphenylene sulfides; polyimides; polyarylates; polysulfones; polyether sulfones; rosin-based resins; terpene-based resins; and petroleum resins.

Examples of the rubbers include ethylene·α-olefin·diene copolymer rubber, propylene·α-olefin·diene copolymer rubber, 1-butene·α-olefin·diene copolymer rubber, polybutadiene rubber, polyisoprene rubber, neoprene rubber, nitrile rubber, butyl rubber, polyisobutylene rubber, natural rubbers, and silicone rubber.

Further, examples of the thermoplastic elastomers include olefin-based elastomers, styrene-based elastomers, acid-modified styrene-based elastomers, vinyl chloride-based elastomers, urethane-based elastomers, ester-based elastomers, and amide-based elastomers.

In addition, these foamable modified resins (a2) may be acid-modified with acrylic acid, methacrylic acid and maleic acid.

These foamable modified resins (a2) may be used alone or in combination of two or more thereof.

Among these foamable modified resins (a2), one or two or more selected from low density polyethylene, medium density polyethylene, high density polyethylene, high pressure low density polyethylene, polypropylene, poly 1-butene, poly 4-methyl-1-pentene, poly 3-methyl-1-butene, ethylene·α-olefin copolymers, propylene·α-olefin copolymers, 1-butene·α-olefin copolymers, polyether block amide copolymers, ethylene·vinyl acetate copolymers, ethylene·methacrylic acid acrylate copolymers, ionomers, fluorine-based resins, acid-modified fluorine-based resins, rosin-based resins, terpene-based resins, and petroleum resins are preferable, and one or two or more, which are selected from polyethylene, polypropylene, poly 1-butene, poly 4-methyl-1-pentene, ethylene·α-olefin copolymers, propylene·α-olefin copolymers, 1-butene·α-olefin copolymers, an ethylene·vinyl acetate copolymer, polyether block amides, ionomers, fluorine-based resins, acid-modified fluorine-based resins, rosin-based resin, terpene-based resins, petroleum resins, and styrene-based elastomers, and improves melt tension by being added, are more preferable.

In addition, it is still more preferable that the resin is appropriately compatible with the 4-methyl-1-pentene-based polymer (a1). Further, among the styrene-based elastomers, vinyl SIS (product name: HYBRAR, brand: 5127) and vinyl SEPS (product name: HYBRAR, brand: 7125) manufactured by Kuraray Co., Ltd. and SEBS (product name: S.O.E, brand: S1605, S1611, and L609) manufactured by Asahi Kasei Co., Ltd. can be preferably used from the viewpoint of compatibility, the temperature range showing maximum value of loss tangent, and the size of maximum value of loss tangent.

In the foam body (A), these foamable modified resins (a2) may be used alone or in combination of two or more thereof.

The content of the foamable modified resin (a2) in the foam body (A) is not particularly limited. When the entire foam body (A) is 100 mass%, the content of the foamable modified resin is preferably 0.5 mass% or more, more preferably 1 mass% or more, still more preferably 2 mass% or more, and even still more preferably 3 mass% or more, and is preferably 50 mass% or less, more preferably 40 mass% or less, still more preferably 35 mass% or less, even still more preferably 30 mass% or less, and particularly preferably 25 mass% or less.

In a case where the content of the foamable modified resin (a2) is equal to or more than the lower limit, the appearance, touch feeling, and foamability (for example, expansion ratio, cell density) of the foam body (A) can be further improved. In a case where the content of the foamable modified resin (a2) is equal to or less than the upper limit, the performance balance of flexibility, shape retainability, and shape followability of the foam body (A) can be further improved.

### <Other Components>

The foam body (A) may be mixed with additives such as a heat-resistant stabilizer, an antioxidant, an ultraviolet absorber, a pigment, an antistatic agent, a copper inhibitor, a flame retardant, a neutralizing agent, a foaming agent, a plasticizer, a nucleating agent, an antifoaming agent, a weathering stabilizer, a light resistance stabilizer, an antiaging agent, a fatty acid metal salt, a softener, a dispersing agent, a coloring agent, a lubricant, natural oil, synthetic oil, and wax as required. Among these, particularly, a plasticizer, a softener, natural oil, and synthetic oil adjust the temperature showing the maximum value of the loss tangent (tan δ) of the solid viscoelasticity of the foam body (A) and the maximum value of the loss tangent, and thus, these additives may be used by controlling the kind and the amount added.

### <Method of Producing Foam Body (A)>

The foam body (A) can be obtained by, for example, foam-molding a resin composition (P) including a 4-methyl-1-pentene-based polymer (a1) or a 4-methyl-1-pentene-based polymer (a1) into a specific shape.

The molding apparatus and the molding conditions are not particularly limited, and known molding apparatuses and molding conditions in the related art can be adopted. It is preferable to perform molding by an extrusion molding apparatus.

As the molding method of the foam body (A), for example, known heat molding methods such as injection molding, extrusion molding (film·sheet extrusion, profile extrusion, fiber extrusion, strand extrusion, and net extrusion), vacuum molding, blow molding, press molding, pressure forming, calender molding, bead molding, and batch foaming can be used. That is, examples of the foam body (A) include an injection molded body, an extrusion molded body, a vacuum molded body, a blow molded body, a press molded body, a pressure molded body, a calender molded body, a bead molded body, and a batch foam body.

As the foam body (A), an extrusion molded body is preferable.

### (Method of Preparing Resin Composition (P) Including 4-Methyl-1-Pentene-Based Polymer (a1))

The resin composition (P) can be prepared by mixing or melting and kneading each component by a dry blender, a tumbler mixer, a Banbury mixer, a single screw extruder, a twin screw extruder, a high speed twin screw extruder, and a hot roll.

### (Method of Molding Foam Body (A))

The foam body (A) can be obtained by, for example, foam-molding the resin composition (P) into a specific shape using a molding apparatus.

As a foaming agent used in a case of molding the foam body (A), a chemical foaming agent and a physical foaming agent may be used.

Examples of the chemical foaming agent include sodium bicarbonate, ammonium bicarbonate, various carboxylates, sodium borohydride, azodicarbamide, **N,** N-dinitrosopentamethylenetetramine, P,P-oxybis(benzenesulfonyl hydrazide), azobisisobutyronitrile, para toluenesulfonyl hydrazide, and sodium bicarbonate sodium citrate.

Examples of the physical foaming agent include carbon dioxide, nitrogen, and a mixture of carbon dioxide and nitrogen, and any of these can be supplied in a gaseous, liquid or supercritical state.

The chemical foaming agent is preferably formulated and uniformly mixed with the resin composition before being introduced into an extrusion molding machine.

In addition, in a case of using carbon dioxide as the physical foaming agent, it is preferable that the resin composition is kneaded and plasticized in an extrusion molding machine and then injected directly into the extrusion molding machine.

The expansion ratio of the resin composition (P) is not particularly limited and can be suitably determined in consideration of various physical properties of the obtained foam body (A).

### <Application of Foam Body (A)>

The foam body (A) can be used for, for example, mobility products such as automobile parts, railway parts, aircraft parts, ship parts, bicycle parts; electronic equipment; household electrical appliances; audio equipment; camera goods; precision equipment; game devices; VR devices; civil engineering and construction articles such as civil engineering parts, construction parts, and construction materials; household goods such as furniture and bedding; daily necessities such as kitchenware, toiletries and stationery; outdoor goods and leisure goods such as backpacks; agricultural goods for gardening; decorative products such as apparel goods, shoe goods, accessories and small portable miscellaneous goods; medical related products such as medical goods and health care goods; sporting goods such as sports products; education and toy goods such as books and toys; packaging related goods such as packaging goods; cosmetics related goods such as face wash and makeup goods; lighting goods such as LED lighting; culture goods such as fishery goods; safety goods such as a child seat; music goods; pet goods; and fishing goods.

Specific examples of mobility products include handles, saddles, shift levers, bumpers, seats, seat belts, headrests, armrests, door trims, instrument panels, various supporters (neck supporters, lumbar supporters), various cushions, and damping materials.

Examples of electronic equipment include smartphone covers, personal computer covers, watch bands, mouses of personal computers, flexible fixed items, and flexible light.

Examples of household electrical appliances include washing machines, and single-lens reflex grips.

Examples of audio equipment include damping materials, vibration proofing materials, sound proofing materials, sound insulation materials, and speakers.

Examples of camera goods include cameras, and camera grips for broadcasting.

Examples of precision equipment include flexible touch panels, and flexible remote controllers.

Examples of game devices include controllers.

Examples of the VR devices include members used for the contact part with the VR devices, and remote controllers for VR.

Examples of civil engineering and building articles include damping materials, vibration proofing materials, sound proofing materials, sound insulation materials, sealing materials, and cushion materials.

Examples of household goods include chairs, legless chairs, legless chairs for backache, armchairs, shock absorbing materials of cushion and sofas, gap filling materials for filling gaps to which a heavy load or furniture load is applied, and fall prevention measures goods for earthquakes, sofas, damping materials, and vibration proofing materials.

Examples of bedding include chairs, mats, beds, futons, pillows, cushions, sitting cushions, hammocks, pillow covers, pillow cushion materials, mattresses, and hot-water bottles.

Examples of kitchenware include grips for cutting boards and kitchen knives, lunch boxes, water bottles, cups, plates, chopsticks, small bowls, wine coolers, wine bags, various insulation bags, drink jugs, coasters, pots, pans, cookware for microwave ovens, storage items in refrigerators and freezers (such as a partition plate, soft sealed container with a fitting part), steamers, table cloths, place mats, and jugs.

Examples of toiletries include paper diapers, toothbrushes, packings, gaskets, sealing materials, thermal insulation, hot water bottles, and bath goods used during bathing (particularly, goods that can utilize the temperature dependence of storage modulus, for example, properties that goods can become hard at a low temperature and can become soft at a high temperature). Examples of the bath goods used during bathing include surface materials for rubbing gloves, legless chairs, mats, roller members for face rollers, and acupressure goods to body surfaces having a solid shape.

Examples of stationery include pen grips, notebooks, notebook covers, and book covers.

Examples of other daily necessities include watch bands, thermometers, shock absorbing materials for fashion dolls, various grips (for pencils and toothbrushes), various covers (disposable hand warmers, notebooks, notebooks covers, western style toilet seats), shock absorbing materials for helmets, blackout curtains, and smartphones.

Examples of outdoor goods include athletic products, nets, tents, chairs, folding chairs, dishes, cutting boards, and hammocks.

Examples of agricultural and gardening goods include graft supporters, packings, gaskets, sealing materials, buckets, and watering cans.

Examples of apparel goods include clothes, underclothes, underwear (for example, bra pads, shoulder pads, and correcting underwear), hats, belts, school bag linings, business card cases, and glasses.

Examples of shoe goods include various insoles, lining materials for shoes, various equipment, shoes, and shoelaces.

The apparel goods and shoe goods do not easily turn yellow during washing or outdoor drying after washing and thus can be suitably used.

Examples of accessories and small portable miscellaneous goods include bracelets, anklets, necklaces, misangas, bangles, wallets, business card holders, various accessory cases, glasses, core materials of bags, nose pads of glasses, and earpieces of glasses.

Examples of medical goods include supporters, casts, bandages, various medical base tapes such as wound tapes, stress relieving goods, mental stabilizing goods, concentration improving goods, and attachment parts of artificial hands and artificial legs. Further, for the purpose of improving air permeability, it is possible to provide pores communicating with the front and back sides by known perforation processing techniques such as mechanical punching, needle processing and laser perforation.

Examples of healthcare goods and nursing care goods include pelvic correction bands, legless chairs for backache, health equipment, training gym equipment, spherical hand exercisers for training grasping power, magnetic necklaces, shock absorbing materials, various supporters (pressure supports for e.g. elbows, knees and hips), face line belts, snoring suppression face belts, waist wraps, pelvic belts, necklaces, bracelets, glasses, dementia prevention goods, magnet loops, stress relieving goods, and wheelchairs (chair parts and holding hands).

Examples of sports goods include sportswear, various grip tapes (for e.g. baseball bats, tennis rackets, badminton rackets, and golf clubs), lining materials for ski and snowboard shoes, gloves, various protectors (foot pads for soccer and martial arts gear), clubs, skis, snowboards, various eye protectors, and various eye nets.

Examples of cultural and educational materials include picture books and maps.

Examples of books include picture books.

Examples of toys include shock absorbing materials for fashion dolls, stuffed toys, masks, and flexible toys included in gacha toys.

Examples of packaging goods include heat-sealable various food packaging materials, medical packaging materials, various industrial packaging materials such as tapes, bundling bands, and strings, shock absorbing materials, and packaging materials.

Examples of cleansing and makeup goods include makeup puffs, face packs, and foundation tapes.

Examples of lighting goods include LED lighting such as flexible light.

Examples of fishery goods include culture sheets and blackout curtains.

Examples of music goods include rubber parts of earphones.

Examples of pet goods include sheets, collars, and toys.

Examples of fishing goods include grips for fishing rods, gloves for fishing, lures, nets and core materials around nets.

Further, various adhesive tapes provided with adhesive layers can be used.

Particularly, since the foam body (A) is excellent in performance balance of flexibility, shape retainability, and shape followability, in a case where the foam body is applied to a member that may come into direct or indirect contact with a human body surface when used, the load applied to the human body can be reduced. Therefore, the foam body (A) can be suitably applied to a member that may come into direct or indirect contact with a human body surface.

The foam body (A) is considered to have a merit of obtaining an excellent body pressure dispersibility (uniformity in body pressure distribution) since the foam body is flexible and easily follows a three-dimensional shape when being applied to the human body surface.

Although the foam body (A) is not particularly limited, the foam body may have a vent hole to increase air permeability depending on the application. For example, it is possible to provide a large number of vent holes communicating with the front and back sides by processing techniques such as mechanical punching, needle processing, laser perforation, and water jet.

Thus, for example, in a case where the foam body is used for a member that may come into direct or indirect contact with a human body surface, it is possible to suppress stuffiness between a surface that comes into contact with the human body surface directly or indirectly and the human body surface.

### <Complex (C)>

The foam body (A) can be used for various applications by forming a complex (C) by combining the foam body (A) and a member (B) that is different from the foam body (A).

That is, the complex (C) includes the foam body (A), and a member (B) that is bonded to the foam body (A) and is different from the foam body (A).

Since the foam body (A) is excellent in performance balance of flexibility and shape followability, inherent properties such as shape followability and flexibility derived from the foam body (A) can be imparted to the member (B) different from the foam body (A). Therefore, the complex (C) has combined properties of both the foam body (A) and the member (B). That is, the complex (C) is excellent in performance balance of flexibility and shape followability.

For example, in a case where the foam body (A) is a foam sheet and the member (B) is a urethane foam having appropriate hardness and thickness as a cushioning member, it is possible to obtain a cushioning material (shock absorbing material) excellent in low rebound and body pressure dispersibility in applications such as shoulder pads, bra pads, pillows, mattresses and chairs as a complex (C) by bonding and laminating the foam body (A) and the member (B) .

As the method of forming the complex (C), various known methods can be applied.

For example, the complex (C) can be prepared by laminating the member (B) on the foam body (A) and performing thermocompression bonding or welding by a press as required.

In addition, the complex (C) can be prepared by applying an adhesive between the foam body (A) and the member (B) and then bonding the foam body (A) and the member (B) through the adhesive.

As the adhesive, an SBR-based solvent adhesive (for example, product name: BOND GP CLEAR, manufactured by Konishi Co., Ltd.), and a hot melt adhesive constituted of EVA, a petroleum resin, or a mixture of EVA and a petroleum resin can be suitably used.

The member (B) different from the foam body (A) is not particularly limited and examples thereof include woven fabrics, non-woven fabrics, synthetic fibers, artificial leathers, synthetic leathers, natural leathers, furs, metals, carbon materials, rubbers, thermoplastic elastomers, thermoplastic resins, thermosetting resins, polymer foam bodies, mesh structures (e.g. warped fibers, double russel meshes, and three-dimensional spring structures), fiber reinforced plastics, papers, woods, glass, stones, and ceramics. These members may be used alone or in combination of two or more thereof. The complex (C) may be, for example, a laminated product obtained by bonding a suede-like artificial leather (product name: ULTRA SUEDE) from Toray Industries, Inc. as an artificial leather and the foam body (A) ; a laminated product obtained by bonding various base cloths (e.g. PVC, polyester, polyurethane, and split fabric) and the foam body (A); or a laminated product obtained by bonding, sewing or physically overlapping an urethane foam body (including a low rebound resilience urethane foam body) as a polymer foam body and the foam body (A) .

### 2. Second Aspect

### <Polyolefin-Based Foam Sheet>

A polyolefin-based foam sheet according to the invention is a foam sheet which
- is an uncrosslinked sheet and
- is a polyolefin-based foam sheet comprising a 4-methyl-1-pentene-based polymer including constitutional units derived from (i) 4-methyl-1-pentene and (ii) C₂₋₃-(α-olefin), the content of the units (i) being 10-90 mol% based on the total of the units (i) and (ii);
wherein ΔHS expressed by (HS₀-HS₁) is 30-60, with HS₀ being the Shore A hardness of at least one surface of the polyolefin-based foam sheet immediately after measurement, measured according to JIS K6253 at 23°C, and HS₁ is the Shore A hardness 15 seconds after the measurement.

Here, the Shore A hardness (HS₀ and HS₁) can be measured by a Shore hardness meter. In addition, the Shore A hardness (HS₀) is a Shore A hardness value immediately after the starting of needle contact and the Shore A hardness (HS₁) is a Shore A hardness value 15 seconds after the starting of needle contact.

As described above, generally, although the polyolefin-based foam sheet is excellent in flexibility, the polyolefin-based foam sheet cannot retain its shape in a case of changing the shape and is inferior in shape retainability and shape followability.
Therefore, a polyolefin-based foam sheet having excellent flexibility, shape retainability, and shape followability is not known.

The present inventors have conducted intensive investigations to realize a polyolefin-based foam sheet excellent in flexibility, shape retainability, and shape followability. As a result, it has been found for the first time that in a polyolefin-based foam sheet using a 4-methyl-1-pentene-based polymer, by setting a difference (ΔHS = HS₀ - HS₁) between the Shore A hardness (HS₀) immediately after measurement and the Shore A hardness (HS₁) 15 seconds after the measurement to a predetermined range, the performance balance of flexibility, shape retainability, and shape followability can be improved, and thus completed the second aspect of the invention.

That is, according to the polyolefin-based foam sheet according to the invention (also referred to as "the present foam sheet" herein), by setting a difference (ΔHS = HS₀ - HS₁) between the Shore A hardness (HS₀) immediately after measurement and the Shore A hardness (HS₁) 15 seconds after the measurement to 30-60, the performance balance of flexibility, shape retainability, and shape followability of the polyolefin-based foam sheet can be improved.

From the above, it is possible to realize a polyolefin-based foam sheet excellent in performance balance of flexibility, shape retainability, and shape followability.

The ΔHS of the present foam sheet is 30 or more, but from the viewpoint of further improving shape retainability and shape followability, the ΔHS is preferably 33 or more, more preferably 37 or more, and still more preferably 40 or more.

In addition, the ΔHS of the present foam sheet is 60 or less. From the viewpoint of further improving flexibility, the ΔHS is preferably 58 or less, more preferably 55 or less, and still more preferably 53 or less.

From the viewpoint of further improving flexibility, the HS₀ of the present foam sheet is preferably 85 or less, more preferably 82 or less, and still more preferably 80 or less.

In addition, from the viewpoint of further improving mechanical properties, the HS₀ of the present foam sheet is preferably 40 or more, more preferably 45 or more, and still more preferably 50 or more.

In the embodiment, for example, by appropriately adjusting (1) the kind and the mixing ratio of the 4-methyl-1-pentene-based polymer constituting the polyolefin-based foam sheet, and (2) a foam molding method, the ΔHS and HS₀ can be controlled to be in the above.

In the range, for example, increasing the mixing ratio of the 4-methyl-1-pentene-based polymer, and performing foam molding by extrusion molding, are factors for setting the ΔHS and HS₀ to the desired numerical range.

The present foam sheet is not crosslinked from the viewpoint of improving the shape retainability and the shape followability. That is, the present foam sheet is an uncrosslinked sheet which is not subjected to a crosslinking treatment, for example, ionizing radiation crosslinking using an electron beam or γ-ray. Thus, the ΔHS can be improved and a polyolefin-based foam sheet more excellent in shape retainability and shape followability can be obtained.

The density of the present foam sheet is preferably 0.80 g/cm³ or less, more preferably 0.75 g/cm³ or less, still more preferably 0.70 g/cm³ or less, and particularly preferably 0.65 g/cm³ or less. In a case where the density is equal to or lower than the upper limit, a lighter polyolefin-based foam sheet can be obtained, the blocking resistance of the polyolefin-based foam sheet can be further improved or the smoothness of the surface can be improved, and as a result, the touch feeling can be improved.

In addition, the density of the polyolefin-based foam sheet is 0.10 g/cm³ or more, more preferably 0.20 g/cm³ or more, still more preferably 0.30 g/cm³ or more, and particularly preferably 0.40 g/cm³ or more. In a case where the density is equal to or more than the lower limit, the mechanical properties, such as bending properties and tensile properties, of the polyolefin-based foam sheet can be further improved.

The density of the present foam sheet can be controlled to be in the above range by appropriately controlling, for example, the kind and the mixing amount of the 4-methyl-1-pentene-based polymer and a foamable modified resin described later, and the expansion ratio of the polyolefin-based foam sheet, respectively.

The maximum peak height (Rp) of at least one surface of the present foam sheet is 190 µm or less and more preferably 180 µm or less from the viewpoint of improving touch feeling of the sheet surface.

The lower limit of the maximum peak height (Rp) is not particularly limited and is for example 30 µm or more.

The maximum peak height (Rp) of the surface of the polyolefin-based foam sheet can be measured according to the JIS B0601:2001.

The maximum peak height (Rp) of the surface of the present foam sheet can be controlled to be in the above range by appropriately controlling, for example, the kind and the mixing amount of the 4-methyl-1-pentene-based polymer and the foamable modified resin, the expansion ratio of the polyolefin-based foam sheet, the foam cell size, and the distribution and the number density of foam cells in unit volume (sometimes simply referred to as cell density),respectively.

The melt tension of the present foam sheet at 180°C is preferably 10-1000 mN, and more preferably 20-500 mN from the viewpoint of further improving appearance, feel, and foamability (for example, expansion ratio and cell density).

The melt tension of the present foam sheet at 180°C can be controlled to be in the above range by appropriately controlling the kind and the mixing amount of the 4-methyl-1-pentene-based polymer and the foamable modified resin respectively.

It is preferable that the temperature showing the maximum value of loss tangent (tan δ) of dynamic viscoelasticity of the present foam sheet is at least one temperature in at least a range of 10-40°C, and the maximum value of the loss tangent is 0.8-3. Thus, at around room temperature, the performance balance of flexibility, shape retainability, and shape followability of the present foam sheet can be further improved.

The thickness of the present foam sheet is not particularly limited and for example, the thickness is 0.1-30 mm, preferably 0.2-20 mm, and more preferably 0.3-12 mm. In a case where the thickness of the present foam sheet is in the above range, the balance of flexibility, shape retainability, shape followability, lightness, mechanical properties, handleability, appearance, formability, and moisture resistance is more excellent.

Hereinafter, each component constituting the present foam sheet will be described.

### <4-Methyl-1-Pentene-Based Polymer>

The present foam sheet includes a 4-methyl-1-pentene-based polymer as an essential component.

As the 4-methyl-1-pentene-based polymer, a 4-methyl-1-pentene·α-olefin copolymer (A) including a constitutional unit (A1) derived from 4-methyl-1-pentene and a constitutional unit (A2) derived from a C₂₋₃-(α-olefin) is used.

In the 4-methyl-1-pentene·α-olefin copolymer (A), from the viewpoint of further improving the flexibility of the polyolefin-based foam sheet, when the total of the constitutional units (A1) and (A2) is 100 mol%, the content of the constitutional unit (A1) is 10-90 mol% and the content of the constitutional unit (A2) is 10-90 mol%.

In addition, in the 4-methyl-1-pentene ·α-olefin copolymer (A), from the viewpoint of further improving the flexibility and the mechanical properties of the polyolefin-based foam sheet, when the total of the constitutional units (A1) and (A2) is 100 mol%, it is preferable that the content of the constitutional unit (A1) is 20-85 mol% and the content of the constitutional unit (A2) is 15-80 mol%, it is more preferable that the content of the constitutional unit (A1) is 30-80 mol% and the content of the constitutional unit (A2) is 20-70 mol%, it is still more preferable that the content of the constitutional unit (A1) is 40-75 mol% the content of the constitutional unit (A2) is 25-60 mol%, it is even still more preferable that the content of the constitutional unit (A1) is 50-75 mol% and the content of the constitutional unit (A2) is 25-50 mol%, and it is particularly preferable that the content of the constitutional unit (A1) is 60-75 mol% and the content of the constitutional unit (A2) is 25-40 mol%.

Examples of the C₂₋₃-(α-olefin) used in the 4-methyl-1-pentene·α-olefin copolymer (A) include a linear α-olefin, and a functionalized vinyl compound, and a linear α-olefin is preferable.

Examples of the linear α-olefin include ethylene and propylene.

Examples of the functionalized vinyl compound include hydroxyl group-containing olefins; halogenated olefins; unsaturated carboxylic acids such as (meth)acrylic acid, and acid anhydrides thereof, , allylamine, and ethylenically unsaturated silane compounds.

These α-olefins may be used alone or in combination of two or more thereof. Among these, ethylene and propylene are suitable, and propylene is particularly preferably used from the viewpoint of being capable of further improving flexibility.

The 4-methyl-1-pentene ·α-olefin copolymer (A) may include other constitutional units in addition to the constitutional units (A1) and (A2) within the range not impairing the object of the present invention. Other constitutions include constitutional units derived from non-conjugated polyenes.

Examples of the non-conjugated polyene include linear, branched, or cyclic dienes having preferably 5-20, more preferably 5-10, carbon atoms, various norbornes, and norbornadienes. Among these, 5-vinylidene-2-norbornene and 5-ethylidene-2-norbornene are preferable.

The intrinsic viscosity [η] of the 4-methyl-1-pentene-based polymer at 135°C in decalin is preferably 0.01-5.0 dL/g, more preferably 0.1-4.0 dL/g, still more preferably 0.5-3.0 dL/g, and particularly preferably 1.0-2.8 dL/g from the viewpoint of further improving the flexibility and the mechanical strength of the polyolefin-based foam sheet.

The density of the 4-methyl-1-pentene-based polymer measured according to ASTM D 1505 (water substitution) is preferably 0.810-0.850 g/cm³, more preferably 0.820-0.850 g/cm³, and still more preferably 0.830-0.850 g/cm³.

The 4-methyl-1-pentene-based polymer can be produced by various methods. For example, the 4-methyl-1-pentene-based polymer can be produced using known catalysts such as magnesium-supported titanium catalysts; metallocene catalysts described in WO 01/53369, WO 01/027124, JP-A-H03-193796, and JP-A-H02-41303; and metallocene compound-containing olefin polymerization catalysts described in WO 2011/055803.

The content of the 4-methyl-1-pentene-based polymer in the present foam sheet is not particularly limited. When the entire polyolefin-based foam sheet is 100 mass%, the content of the 4-methyl-1-pentene-based polymer is preferably 50 mass% or more, more preferably 60 mass% or more, still more preferably 65 mass% or more, and particularly preferably 70 mass% or more, and is preferably 100 mass% or less, more preferably 99.5 mass% or less, still more preferably 99 mass% or less, even still more preferably 98 mass% or less, and particularly preferably 97 mass% or less.

Thus, it is possible to obtain a polyolefin-based foam sheet which is more excellent in balance of flexibility, shape retainability, shape followability, lightness, mechanical properties, handleability, appearance, moldability, and moisture resistance.

### <Foamable Modified Resin>

The present foam sheet preferably contains a foamable modified resin (however, excluding the 4-methyl-1-pentene-based polymer) from the viewpoint of further improving appearance, a touch feeling, and foamability (for example, expansion ratio, cell density).

The foamable modified resin is not particularly limited as long as the resin improves the foamability of the polyolefin-based foam sheet. For example, a thermoplastic resin is preferable.

Examples of thermoplastic resins (however, excluding the 4-methyl-1-pentene-based polymer) include thermoplastic polyolefin resins such as low density polyethylene, medium density polyethylene, high density polyethylene, high pressure low density polyethylene, polypropylene, poly 1-butene, poly 4-methyl-1-pentene, poly 3-methyl-1-butene, ethylene·α-olefin copolymers, propylene·α-olefin copolymers, 1-butene·α-olefin copolymers, cyclic olefin copolymers, and chlorinated polyolefin; thermoplastic polyamide-based resins such as aliphatic polyamides (such as nylon 6, nylon 11, nylon 12, nylon 66, nylon 610, and nylon 612), and polyether block amide; thermoplastic polyester-based resins such as polyethylene terephthalate, polybutylene terephthalate, and polyester-based elastomers; thermoplastic vinyl aromatic resins such as polystyrene, ABS resin, AS resin, and styrene-based elastomers (styrene·butadiene·styrene block polymer, styrene·isoprene·styrene block polymer, styrene·isobutylene·styrene block polymer, and the above-mentioned hydrogen additives); thermoplastic polyurethanes; vinyl chloride resin; vinylidene chloride resin; acryl resin; ethylene·vinyl acetate copolymers; ethylene·methacrylic acid acrylate copolymers; ionomers; ethylene·vinyl alcohol copolymers; polyvinyl alcohols; fluorine-based resins such as polyvinyl fluoride resin, polytetrafluoroethylene, polyvinylidene fluoride, and ETFE; polycarbonates; polyacetals; polyphenylene oxides; polyphenylene sulfides; polyimides; polyarylates; polysulfones; polyether sulfones; rosin-based resins; terpene-based resins; petroleum resins; and copolymer rubbers, such as ethylene·α-olefin·diene copolymers, propylene·α-olefin·diene copolymers, 1-butene·α-olefin·diene copolymers, polybutadiene rubber, polyisoprene rubber, neoprene rubber, nitrile rubber, butyl rubber, polyisobutylene rubber, natural rubbers, and silicone rubber. In addition, these resins may be acid-modified with acrylic acid, methacrylic acid, and maleic acid.

Among these foamable modified resins, one or two or more selected from low density polyethylene, medium density polyethylene, high density polyethylene, high pressure low density polyethylene, polypropylene, poly 1-butene, poly 4-methyl-1-pentene, poly 3-methyl-1-butene, ethylene·α-olefin copolymers, propylene·α-olefin copolymers, 1-butene·α-olefin copolymers, polyether block amides, styrene-based elastomers, acid-modified styrene-based elastomers, vinyl acetate copolymers, ethylene·methacrylic acid acrylate copolymers, ionomers, fluorine-based resins, acid-modified fluorine-based resins, rosin-based resins, terpene-based resins, and petroleum resins are preferable, and one or two or more, which are selected from polyethylene, polypropylene, poly 1-butene, poly 4-methyl-1-pentene, ethylene·α-olefin copolymers, propylene·α-olefin copolymers, 1-butene·α-olefin copolymers, vinyl acetate copolymers, styrene-based elastomers, acid-modified styrene-based elastomers, polyether block amides, thermoplastic polyurethane, ionomers, fluorine-based resins, acid-modified fluorine-based resins, rosin-based resin, terpene-based resins, and petroleum resins, and improves melt tension by being added, are more preferable. In addition, it is still more preferable that the resin is appropriately compatible with the 4-methyl-1-pentene-based polymer.

In the present foam sheet, these foamable modified resins may be used alone or in combination of two or more thereof.

The content of the foamable modified resin in the present foam sheet is not particularly limited but when the entire polyolefin-based foam sheet is 100 mass%, the content of the foamable modified resin is preferably 0.5 mass% or more, more preferably 1 mass% or more, still more preferably 2 mass% or more, and even still more preferably 3 mass% or more, and is preferably 50 mass% or less, more preferably 40 mass% or less, still more preferably 35 mass% or less, even still more preferably 30 mass% or less, and particularly preferably 25 mass% or less.

In a case where the content of the foamable modified resin is equal to or more than the lower limit, the appearance, touch feeling, and foamability (for example, expansion ratio, cell density) of the present foam sheet can be further improved. In a case where the content of the foamable modified resin is equal to or less than the upper limit, the performance balance of flexibility, shape retainability, and shape followability of the present foam sheet can be further improved.

### <Other Components>

The present foam sheet may be mixed with additives such as a heat-resistant stabilizer, an antioxidant, an ultraviolet absorber, a pigment, an antistatic agent, a copper inhibitor, a flame retardant, a neutralizing agent, a foaming agent, a plasticizer, a nucleating agent, an antifoaming agent, a weathering stabilizer, a light resistance stabilizer, an antiaging agent, a fatty acid metal salt, a softener, a dispersing agent, a coloring agent, a lubricant, natural oil, synthetic oil, and wax as required.

### <Method of Producing Polyolefin-Based Foam Sheet>

The polyolefin-based foam sheet can be obtained by, for example, foam-molding a resin composition including a 4-methyl-1-pentene-based polymer or only a 4-methyl-1-pentene-based polymer into a sheet shape.

The molding apparatus and the molding conditions are not particularly limited, and known molding apparatuses and molding conditions in the related art can be adopted. In a case of using extrusion molding, a skin layer is not easily formed on the surface of the obtained polyolefin-based foam sheet and a polyolefin-based foam sheet the ΔHS is in the desired range is easily obtained.

### (Method of Preparing 4-methyl-1-pentene-based polymer-based resin composition)

The 4-methyl-1-pentene-based polymer-based resin composition can be prepared by mixing or melting and kneading each component by a dry blend, a tumbler mixer, a Banbury mixer, a single screw extruder, a twin screw extruder, a high speed twin screw extruder, or a hot roll.

### (Method of Molding Polyolefin-Based Foam Sheet)

The present foam sheet can be obtained by, foam-molding the above-described 4-methyl-1-pentene-based polymer-based resin composition into a sheet shape, for example, using an extrusion molding machine.

As a foaming agent used in a case of molding the present foam sheet, a chemical foaming agent and a physical foaming agent may be used.

Examples of the chemical foaming agent include sodium bicarbonate, ammonium bicarbonate, various carboxylates, sodium borohydride, azodicarbamide, N, N-dinitrosopentamethylenetetramine, P,P-oxybis(benzenesulfonyl hydrazide), azobisisobutyronitrile, para toluenesulfonyl hydrazide, and sodium bicarbonate sodium citrate.

Examples of the physical foaming agent include carbon dioxide, nitrogen, and a mixture of carbon dioxide and nitrogen, and any of these can be supplied in a gaseous, liquid or supercritical state.

The chemical foaming agent is preferably formulated and uniformly mixed with the 4-methyl-1-pentene-based polymer-based resin composition before being introduced into an extrusion molding machine.

In addition, in a case of using carbon dioxide as the physical foaming agent, it is preferable that the 4-methyl-1-pentene-based polymer-based resin composition is kneaded and plasticized in an extrusion molding machine and then injected directly into the extrusion molding machine.

The expansion ratio of the 4-methyl-1-pentene-based polymer-based resin composition is not particularly limited and can be suitably determined in consideration of various physical properties of the obtained polyolefin-based foam sheet.

### <Application of Polyolefin-Based Foam Sheet>

The present foam sheet is suitably used for, for example, damping materials, vibration proofing materials, sound proofing materials or sound insulation materials in the field of automobiles, railways, aircrafts, ships, civil engineering, construction, household electrical appliances such as washing machines, and audio equipment. In addition, the polyolefin-based foam sheet can also be used for various grips (such as handles for automobiles and bicycles, sports goods such as baseball bats, tennis rackets, and golf clubs, and daily necessities such as pencils, toothbrushes, and cookware), shock absorbing materials of various gloves, underwear goods such as bra cups, lining materials for ski shoes, packing, gaskets, sealing materials, protectors, shoe insoles, sportswear and clothing (including belts and hats), linings for bags, various bedding such as pillows (including water pillows) and mattresses, nursing care goods, shock absorbing materials for furniture such as cushion and seats, gap filling materials for filling gaps to which a heavy load or furniture load is applied, bicycle saddles, shock absorbing materials for various health goods, supporters that hold each part of the body, bath goods used during bathing (for example, legless chair shock absorbing materials), covers for hot water bottles and disposable hand warmers, smartphone covers, toys and miscellaneous goods including a shock absorbing material such as stuffed toys and fashion dolls, grafting supporters in the field of agriculture and gardening, simple casts, bandages, and heat-sealable food or industrial packaging and packing materials. Further, the polyolefin-based foam sheets can be used as various adhesive tapes by applying an adhesive layer.

Particularly, since the present foam sheet is excellent in performance balance of flexibility, shape retainability, and shape followability, in a case where the polyolefin-based foam sheet is applied to a member that may come into direct or indirect contact with a human body surface, the load applied to the human body can be reduced. Therefore, the present foam sheet can be suitably applied to a member that may come into direct or indirect contact with a human body surface. For example, in a case where the polyolefin-based foam sheet is used as a constitutional member for a mattress for bedding or an insole, it is considered to have a merit of being excellent in body pressure dispersibility (uniformity in body pressure distribution) since the polyolefin-based foam sheet is flexible and easily follows a three-dimensional shape when a part of the weight is applied to each member.

In addition, for high heels and pumps for women, by the support pad function for a specific area such as the arch, which is a part of the sole, the shoe rubbing part of the heel, or the toe part, and the effect of flowing the solid shape of the sole, the effect of preventing slip of feet inside the footwear during walking or exercise can be expected. Further, as the present foam sheet, various urethane-based foam materials, which are widely used as shock absorbing materials including an insole in the related art and are excellent in flexibility and cushioning properties, crosslinked foam materials formed of polyethylene or an ethylene·vinyl acetate copolymer, styrene-based elastomers and silicone elastomers, well-ventilated pile fabrics a skin material for suppressing the internal heat of footwear, may be combined by bonding and lamination and used.

In addition, for example, the application of the present foam sheet is the same as the application of the present foam body (A). Regarding the same applications as the applications of the foam body (A), the detailed description thereof is omitted.

### <Complex>

present foam sheet can be used for various applications by forming a complex by combining the polyolefin-based foam sheet with a member different from the polyolefin-based foam sheet.

That is, the complex includes the present foam sheet and a member which is bonded to the present foam sheet and is different from the present foam sheet.

Since the present foam sheet is excellent in performance balance of flexibility and shape followability, inherent properties, such as shape followability and flexibility, derived from the present foam sheet can be imparted to a member different from the present foam sheet. Therefore, the complex has combined properties of both the present foam sheet and the member different from the present foam sheet. That is, the complex is excellent in performance balance of flexibility and shape followability.

For example, in a case where the member different from the present foam sheet is a urethane foam having appropriate hardness and thickness as a cushioning member, it is possible to obtain a cushioning material (shock absorbing material) excellent in low rebound and body pressure dispersibility in applications such as shoulder pads, bra pads, pillows, mattresses and chairs by bonding and laminating the present foam sheet and the member different from the present foam sheet to form a complex.

As the method of forming the complex, various known methods can be applied.

For example, the complex can be prepared by laminating another member on the present foam sheet and performing thermocompression bonding or welding by a press as required.

In addition, the complex can be prepared by applying an adhesive between the present foam sheet and another member and then bonding the present foam sheet and the other member through the adhesive.

As the adhesive, an SBR-based solvent adhesive (for example, product name: BOND GP CLEAR, manufactured by Konishi Co., Ltd.), and a hot melt adhesive constituted of EVA, a petroleum resin, or a mixture of EVA and a petroleum resin can be suitably used.

The member different from the present foam sheet is not particularly limited and examples thereof include woven fabrics, non-woven fabrics, synthetic fibers, artificial leathers, synthetic leathers, natural leathers, furs, metals, carbon materials, rubbers, thermoplastic elastomers, thermoplastic resins, thermosetting resins, polymer foam bodies, mesh structures (e.g. warped fibers, double russel meshes, and three-dimensional spring structures), fiber reinforced plastics, papers, woods, glass, stones, and ceramics. These members may be used alone or in combination of two or more thereof. The complex may be, for example, a laminated product obtained by bonding a suede-like artificial leather (product name: ULTRA SUEDE) from Toray Industries, Inc. as an artificial leather and the present foam sheet; a laminated product obtained by bonding various base cloths (e.g. PVC, polyester, polyurethane, and split fabric) and the present foam sheet; or a laminated product obtained by bonding, sewing or physically overlapping an urethane foam body (including a low rebound resilience urethane foam body) as a polymer foam body and the present foam sheet.

### [Examples]

### <Example and Comparative Example According to First Invention of Present Application>

Hereinafter, the first aspect of the invention will be specifically described based on examples.

### 1. Measurement Method

### (1) Density of Foam Body (A)

A test piece was cut out from the foam body (A) and the test piece mass (g) was divided the by volume (cm³) obtained from the outer dimension of the test piece to obtain density.

### (2) Dynamic Viscoelasticity Measurement

The foam body (A) was cut into a strip having a size of 30 mm length × 10 mm width, and the strip was used as a test piece. Next, the temperature dependence of dynamic viscoelasticity was measured using MC301 manufactured by Anton Paar GmbH under the conditions of a chuck distance of 20 mm, a frequency of 1.59 Hz, a distortion of 0.1%, a temperature increase rate of 4 °C/min in a twist mode in a measurement temperature range of 0°C to 110°C. From the obtained graph, the temperature showing the maximum value of the loss tangent (tan δ) and the maximum value of the tan δ were respectively obtained.

### (3) Evaluation of Flexibility of Foam Body (A)

The foam body (A) was cut into a strip having a size of 100 mm length × 20 mm width, and the strip was used as a test piece. The test piece was bent at the center of the test piece so as to hold a state in which the test piece was in contact with the upper and lower surfaces of a brass flat plate 1 (100 mm × 100 mm × 1 mm thickness) on a horizontal surface under an environment of 23°C. Next, a brass flat plate 2 (50 mm × 50 mm × 1 mm thickness) was overlapped with the brass flat plate immediately, and a weight was placed on the test piece so that the total load was 1 kgf. This state was held for 3 minutes and then the load was removed.

Next, the flexibility of the foam body (A) was evaluated based on the following standards.

O: No whitening, crevices or cracks was visually observed in the bent part.

X: Whitening, crevices or cracks was easily visually observed in the bent part.

### (4) Evaluation of Shape Retainability of Foam Body (A)

The foam body (A) was cut into a strip having a size of 100 mm length × 20 mm width and the strip was used as a test piece. The test piece was bent at the center of the test piece so as to hold a state in which the test piece was in contact with the upper and lower surfaces of a brass flat plate 1 (100 mm × 100 mm × 1 mm thickness) on a horizontal surface under an environment of 23°C. Next, a brass flat plate 2 (50 mm × 50 mm × 1 mm thickness) was overlapped with the brass flat plate immediately, and a weight was placed on the test piece so that the total load was 9.8 N. This state was held for 3 minutes and then the load was removed.

In the process of returning the test piece to its original shape from immediately after the removal of the load, the time for the entire part of the bent half of the test piece to pass the vertical straight line was measured and the shape retainability of the foam body (A) was evaluated based on the following standards.

OO: The bent state (bending angle in a range of 0-90°) was maintained for 1 minute or longer.

O: The bent state (bending angle in a range of 0-90°) was maintained for 30 seconds to less than 1 minute.

Δ: The bent state (bending angle in a range of 0-90°) was maintained for 1 to less than 30 seconds.

X: The bent state (bending angle in a range of 0-90°) was not able to be maintained for 1 second or longer and returned to the original shape immediately.

### (5) Evaluation 1 of Shape Followability of Foam Body (A)

A footwear insole was prepared using the obtained foam body (A) and placed in a shoe. Next, the obtained shoe was put on for 30 minutes and then the footwear insole was removed.

Next, the shape of the footwear insole was observed and the shape followability of the foam body (A) was evaluated based on the following standards.

O: The footwear insole followed the solid shape of the sole and was deformed.

X: The footwear insole was not deformed.

### (6) Evaluation 2 of Shape Followability of Foam Body (A)

A pressure support was prepared using the obtained foam body (A) and the obtained pressure support was tightened on the calf of the leg. Next, the shape followability of the foam body (A) was evaluated based on the following standards.

O: The pressure support gradually followed the shape of the calf immediately after being tightened on the calf, and finally, a feeling of the entire calf being tightened uniformly was given.

X: The pressure support was maintained in a state of being first tightened on the calf and did not follow the shape of the calf, and a feeling of the entire calf being tightened uniformly was not given.

(7) Intrinsic Viscosity [ 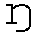 ] of 4-Methyl-1-Pentene-Based Polymer

The intrinsic viscosity [η] was measured at 135°C using a decalin solvent.

### (8) Composition of 4-Methyl-1-Pentene-Based Polymer

The contents of 4-methyl-1-pentene and α-olefin in the 4-methyl-1-pentene-based polymer were quantitatively determined from ¹³C-NMR.

### (9) Density of 4-Methyl-1-Pentene-Based Polymer

The density of the 4-methyl-1-pentene was calculated from the weight of each sample measured in water and air using an electronic densimeter MD-300S manufactured by ALFA MIRAGE Co., Ltd., according to ASTM D 1505 (water substitution method).

### 2. Raw Materials

The raw materials used in Examples and Comparative Examples are shown below.

### (1) 4-Methyl-1-Pentene-Based Polymer (a1)

4-Methyl-1-pentene-based polymer 1: a copolymer of 4-methyl-1-pentene and propylene (content of constitutional unit derived from 4-methyl-1-pentene: 72 mol%, content of constitutional unit derived from propylene: 28 mol%, intrinsic viscosity [η] in decalin at 135°C: 1.5 dL/g, density measured according to ASTM D 1505 (water substitution method): 0.84 g/cm³)
4-Methyl-1-pentene-based polymer 2: a copolymer of 4-methyl-1-pentene and propylene (content of constitutional unit derived from 4-methyl-1-pentene: 85 mol%, content of constitutional unit derived from propylene: 15 mol%, intrinsic viscosity [η] in decalin at 135°C: 1.4 dL/g, density measured according to ASTM D 1505 (water substitution method): 0.84 g/cm³)

### (2) Partially Crosslinkable Olefin-Based Elastomer

Density: 0.88 g/cm³, MILASTOMER 4010N, manufactured by Mitsui Chemical Co., Ltd.

### (3) Foamable Modified Resin

Foamable modified resin 1: styrene-based elastomer (density: 0.90 g/cm³, SEBS, Kraton G1657MS, manufactured by Kraton Polymer Japan Ltd.)
Foamable modified resin 2: maleic acid anhydride-modified styrene-based elastomer (density: 0.90 g/cm³, TUFTEC M1943, manufactured by Asahi Kasei Corporation)
Foamable modified resin 3: thermoplastic polyamide-based resin (density: 1.01 g/cm³, polyether block amide copolymer, PEBAX 2533 (SA01), manufactured by Arkema group)
Foamable modified resin 4: polypropylene (density: 0.91 g/cm³, propylene homopolymer, VP103W, manufactured by Prime Polymer Co., Ltd.)
Foamable modified resin 5: acrylic acid-modified polytetrafluoroethylene (density: 1.2 g/cm³, METABLEN A-3000, manufactured by MITSUBISHI RAYON Co., Ltd.)
Foamable modified resin 6: low density polyethylene (density: 0.92 g/cm³, NOVATEC LD YF30, manufactured by Japan polyethylene Corporation)

### (4) Foaming Agent

Foaming agent 1: sodium bicarbonate sodium citrate (P-4, manufactured by Otsuka Chemical Co., Ltd.)

### [Examples 1-21]

As a molding machine, an apparatus including a single screw extrusion molding machine (cylinder inner diameter D: 50 mm, full flight screw, when the screw effective length is L, L/D: 32 mm, carbon dioxide supply position: 17.5 D from screw supply part side), a T-die (die width: 320 mm, lip opening: 0.5-1.8 mm), a cooling roll (outer diameter: 50 mm, formed of steel subjected to mirror surface finish hard chrome plating surface treatment, water cooling type), a carbon dioxide supply device, a cooling roll, and a taking-over machine was used.

First, each raw material was dry-blended with formulation shown in Tables 1A and 2A (the unit in the tables is parts by mass) respectively, the obtained mixture was put into a hopper, and carbon dioxide was injected into the middle (position: 17.5D) of the cylinder of the extrusion molding machine from the carbon dioxide supply device at a pressure of 10-23 MPa. At this time, the amount of carbon dioxide injected was adjusted to 0.1-0.8 mass% with respect to the extrusion amount. Each component material was melted and kneaded under the conditions of temperature of 100-230°C at each part of the cylinder and a screw rotation speed of 20-36 rpm, and the mixture was extruded from the T-die such that the extrusion amount was 5-8.5 kg/hour at a resin temperature of 130-195°C in the cylinder head part. The extruded foam sheet was cooled by the cooling roll (water temperature flowing in the roll: 30°C), and was taken over using the taking-over machine (taking-over speed: 0.4-2.3 m/min) to obtain foam bodies A1 to A21 having a sheet width of about 300 mm respectively.

Each evaluation was performed on the obtained foam bodies A1 to A21. The obtained results are shown in Tables 1A and 2A respectively.

### [Comparative Examples 1 and 2]

As a molding machine, an apparatus including a single screw extrusion molding machine (cylinder inner diameter D: 50 mm, full flight screw, when the screw effective length is L, L/D: 32 mm), a T-die (die width: 320 mm, lip opening: 0.5 mm), a cooling roll (outer diameter: 50 mm, formed of steel subjected to mirror surface finish hard chrome plating surface treatment, water cooling type), a cooling roll, and a taking-over machine, which is the same as the molding machine in Examples 1-21 except not using the carbon dioxide supply device, was used.

First, each raw material was dry-blended with formulation shown in Table 2A (the unit in the table is parts by mass) respectively, and the obtained mixture was put into a hopper. Each component material was melted and kneaded under the conditions of temperature of 100-180°C at each part of the cylinder and a screw rotation speed of 20 rpm, and the mixture was extruded from the T-die such that the extrusion amount was 6-7 kg/hour at a resin temperature of 182-185°C in the cylinder head part. The extruded foam sheet was cooled by the cooling roll (water temperature flowing in the roll: 30°C), and was taken over using the taking-over machine to obtain molded bodies 22 and 23 respectively.

Each evaluation was performed on the obtained molded bodies 22 and 23. The obtained results are shown in Table 2A respectively.

The molded bodies of Comparative Examples 1 and 2 had poor flexibility and thus the evaluation of shape retainability and shape followability was not performed.

### [Comparative Example 3]

As a molding machine, an apparatus including a single screw extrusion molding machine (cylinder inner diameter D: 50 mm, full flight screw, when the screw effective length is L, L/D: 32 mm), a T-die (die width: 320 mm), a cooling roll (outer diameter: 50 mm, formed of steel subjected to mirror surface finish hard chrome plating surface treatment, water cooling type), a carbon dioxide supply device, a cooling roll, and a taking-over machine, which is the same as the molding machine in Examples 1-21 except that the lip opening is set to 1.05 mm, was used.

First, each raw material was dry-blended with formulation shown in Table 2A (the unit in the table is parts by mass) respectively, and the obtained mixture was put into a hopper. Each component material was melted and kneaded under the conditions of temperature of 180-200°C at each part of the cylinder and a screw rotation speed of 42 rpm, and the mixture was extruded from the T-die such that the extrusion amount was 11 kg/hour at a resin temperature of 207°C in the cylinder head part. The extruded foam sheet was cooled by the cooling roll (water temperature flowing in the roll: 30°C), and was taken over using the taking-over machine to obtain a foam body 24.

Each evaluation was performed on the obtained foam body 24. The obtained results are shown in Table 2A.

### [Comparative Example 4]

A foam body 25 (polyethylene-based foam sheet, HI-SHEET, manufactured by Mistui Mitsui Chemicals, Inc.) was used and subjected to each evaluation. The obtained results are shown in Table 2A.

**[Table 1A]**

| | Raw material | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Composition [Parts by mass] | 4-Methyl-1-pentene-based polymer 1 | 100 | 90 | 90 | 85 | 90 | 80 | 70 | 90 | 85 | 100 | 100 | 100 |
| | 4-Methyl-1-pentene-based polymer 2 | | | | | | | | | | | | |
| | Foamable modified resin 1 | | | 5 | 5 | | | | | | | | |
| | Foamable modified resin 2 | | | | | 10 | 20 | 30 | | 5 | | | |
| | Foamable modified resin 3 | | | | | | | | 10 | 10 | | | |
| | Foamable modified resin 4 | | 10 | 5 | 10 | | | | | | | | |
| | Foamable modified resin 5 | | | | | | | | | | 1 | 3 | 4 |
| | Foamable modified resin 6 | | | | | | | | | | | | |
| | Foaming agent 1 | 0.3 | 0.3 | 0.3 | 0.3 | 0.3 | 0.3 | 0.3 | 0.3 | 0.3 | 0.3 | 0.3 | 0.3 |
| Evaluation result | Density of sheet [g/cm³] | 0.53 | 0.48 | 0.47 | 0.49 | 0.51 | 0.52 | 0.55 | 0.51 | 0.59 | 0.53 | 0.54 | 0.56 |
| | Thickness of sheet [mm] | 1.0 | 1.6 | 1.6 | 1.6 | 0.9 | 0.8 | 1.2 | 0.9 | 1.0 | 1.1 | 1.2 | 1.3 |
| | Temperature showing maximum value of tan δ [°C] | 27 | 27 | 28 | 28 | 28 | 27 | 27 | 27 | 28 | 29 | 29 | 28 |
| | Maximum value of tan δ | 2.3 | 1.5 | 1.5 | 1.3 | 2.3 | 2.2 | 1.9 | 2.0 | 2.3 | 2.6 | 2.1 | 1.9 |
| | Flexibility | ○ | ○ | ○ | ○ | ○ | ○ | ○ | ○ | ○ | ○ | ○ | ○ |
| | Shape retainability | ○○ | ○○ | ○○ | ○○ | ○○ | ○○ | ○ | ○○ | ○○ | ○○ | ○○ | ○○ |
| | Shape followability 1 | ○ | ○ | ○ | ○ | ○ | ○ | ○ | ○ | ○ | ○ | ○ | ○ |
| | Shape followability 2 | ○ | ○ | ○ | ○ | ○ | ○ | ○ | ○ | ○ | ○ | ○ | ○ |

**[Table 2A]**

| | Raw material | Example 13 | Example 14 | Example 15 | Example 16 | Example 17 | Example 19 | Example 20 | Example 21 | Comparative Example 1 | Comparative Example 2 | Comparative Example 3 | Comparative Example 4 |
|---|---|---|---|---|---|---|---|---|---|---|---|---|---|
| Composition [Parts by mass] | 4-Methyl-1-pentene-based polymer 1 | 100 | 80 | 90 | 80 | 85 | 90 | | 50 | 100 | 100 | | Polyethylene -based foam sheet |
| | 4-Methyl-1-pentene-based polymer 2 | | | | | | | 100 | 50 | | | | |
| | Partially crosslinkable olefin-based elastomer | | | | | | | | | | | 90 | |
| | Foamable modified resin 1 | | 20 | | | | | | | | | | |
| | Foamable modified resin 2 | | | 10 | 20 | 5 | | | | | | | |
| | Foamable modified resin 3 | | | | | 10 | | | | | | | |
| | Foamable modified resin 4 | | | | | | | | | | | 10 | |
| | Foamable modified resin 5 | 5 | 3 | 3 | 3 | 3 | | | | | 3 | | |
| | Foamable modified resin 6 | | | | | | 10 | | | | | | |
| | Foaming agent 1 | 0.3 | 0.3 | 0.3 | 0.3 | 0.3 | 0.3 | 0.3 | 0.3 | 0 | 0.3 | 0.3 | |
| Evaluation result | Density of sheet [g/cm³] | 0.55 | 0.43 | 0.50 | 0.49 | 0.51 | 0.61 | 0.60 | 0.50 | 0.84 | 0.84 | 0.41 | 0.33 |
| | Thickness of sheet [mm] | 2.0 | 2.5 | 1.7 | 1.6 | 1.8 | 1.6 | 1.1 | 1.1 | 2.1 | 2.8 | 1.7 | 1.7 |
| | Temperature showing maximum value of tan δ [°C] | 29 | 29 | 27 | 28 | 28 | 28 | 47 | 35 | 29 | 31 | None | None |
| | Maximum value of tan δ | 2.2 | 2.0 | 1.9 | 1.8 | 1.8 | 1.9 | 0.8 | 1.3 | 2.6 | 2.1 | None | None |
| | Flexibility | ○ | ○ | ○ | ○ | ○ | ○ | ○ | ○ | × | × | ○ | ○ |
| | Shape retainability | ○○ | ○ | ○○ | ○ | ○○ | ○ | ○○ | ○○ | - | - | × | × |
| | Shape followability 1 | ○ | ○ | ○ | ○ | ○ | ○ | ○ | ○ | - | - | × | × |
| | Shape followability 2 | ○ | ○ | ○ | ○ | ○ | ○ | ○ | ○ | - | - | × | × |

As clearly seen from Tables 1A and 2A, it was found that the foam bodies (A) of Examples in which one or more temperatures showing the maximum value of loss tangent (tan δ) of dynamic viscoelasticity exist in at least a range of 10-100°C, and the maximum value of the loss tangent was 0.8-3.5 were excellent in performance balance of flexibility, shape retainability, and shape followability.

On the other hand, the molded bodies of Comparative Examples 1 and 2 were inferior in flexibility. In addition, the foam bodies of Comparative Examples 3 and 4 were excellent in flexibility but inferior in shape retainability and shape followability.

### <Examples and Comparative Examples According to the Second Aspect>

Hereinafter, the second aspect will be specifically described based on examples.

### 1. Measurement Method

### (1) Density of Polyolefin-Based Foam Sheet

A test piece was cut out from the polyolefin-based foam sheet and the test piece mass (g) was divided the by volume (cm³) obtained from the outer dimension of the test piece to obtain density.

### (2) Shore A hardness of polyolefin-based foam sheet surface

The Shore A hardness was measured at 23°C according to JIS K 6253 except that a test piece in which a plurality of the same kind of polyolefin-based foam sheets were overlapped with each other and the total thickness thereof was adjusted to be in a range of 7 mm or more and 30 mm or less was used. Here, the Shore A hardness (HS₀) is a Shore A hardness value immediately after the starting of needle contact and the Shore A hardness (HS₁) is a Shore A hardness value 15 seconds after the starting of needle contact.

The measurement was performed 5 times and the average value was adopted.

In addition, in the case of the Shore A hardness measurement, the fact that the minimum value of the total thickness by lamination of the sheets was set to 7 mm was based on the confirmation that, as a result of conducting investigations of the dependence of the total thickness of the overlapped sheets on the Shore A hardness by the present inventors in advance, as long as the total thickness of the sheets is 7 mm or more, the Shore A hardness is almost constant. In the case where the single sheet thickness is 7 mm or more, it is not necessary to measure the thickness by overlapping the sheets and the Shore A hardness of the single sheet is measured.

### (3) Melt Tension of Polyolefin-Based Foam Sheet

The melt tension of the polyolefin-based foam sheet at 180°C was measured using a capillary rheometer (CAPIROGRAPH, manufactured by Toyo Seiki Kogyo Co., Ltd.) and a capillary having a circular cross section (flow path length: 8 mm, flow path cross section inner diameter: 2.095 mm, inflow angle: 180°). First, a sample was poured into a barrel of a cylindrical reactor and melted at 180°C for 6 minutes and then pushed out by a piston at a constant rate of 15 mm/min. Next, the molten strand that came out through the capillary was hooked on a pulley with a load cell (retention pulley) and pulled at a constant speed of 15 m/min by the take-off machine. At this time, the force on the load cell of the pulley was defined as the melt tension.

### (4) Maximum Peak Height (Rp) of Polyolefin-Based Foam Sheet Surface

The measurement was carried out according to JIS B0601:2001 using a one-shot 3D shape measuring instrument (VR3000, manufactured by Keyence Corporation). Here, the evaluation length was 6 mm.

### (5) Dynamic Viscoelasticity Measurement

The polyolefin-based foam sheet was cut into a test piece having a size of 30 mm length × 10 mm width. Next, the temperature dependence of dynamic viscoelasticity was measured using MC301 manufactured by Anton Paar GmbH under the conditions of a frequency of 10 rad/sec, a temperature increase rate of 4 °C/min, and a measurement temperature range of 0-50°C, and the temperature indicating the maximum value of the loss tangent (tan δ) due to the glass transition point in the temperature range and the maximum value of tan δ were determined.

### (6) Blocking Properties of Polyolefin-Based Foam Sheet

The blocking properties of polyolefin-based foam sheet were evaluated by the following method.

First, the polyolefin-based foam sheet was cut into a strip having a size of 200 mm length × 50 mm width. Next, the strip was cut into two test pieces having the same length as each other in the longitudinal direction and the front and back surfaces of the strips were overlapped with each other. A part (50 mm length × 50 mm width) corresponding to a half of the area of the two overlapped test pieces (100 mm length × 50 mm width) was sandwiched between two brass flat plates from the vertical direction, and a weight was placed on the brass flat plates so that the total load (including the weight of one upper brass flat plate) was 19.6 N. Next, the brass flat plates were left to stand in an environment of 23°C for 3 hours. Thereafter, the load was removed and the brass flat plates were left to stand for 30 minutes.

Next, a round bar fixed in the horizontal direction (a round bar in which a glass cloth adhesive tape (thickness of 80 µm) impregnated with polytetrafluoroethylene was attached to a stainless steel tube with an outer diameter of 6 mm) was placed into the gap in the part where the front and back surfaces of the test pieces were overlapped with each other, the test pieces were pulled in the direction perpendicular to the round bar under the following conditions using a tensile tester, the front and back surfaces of the test pieces were peeled off, and a blocking force (= peeling force (N)/test piece width (50 mm)) was measured. Here, the initial value of the load when the front and back surfaces of the test pieces were peeled off was set to a peeling force (N).
Test piece: 100 mm length × 50 mm width
Test temperature: 23°C
Drawing speed: 50 mm/min
Based on the obtained blocking force, the blocking properties of the polyolefin-based foam sheet were evaluated based on the following standards.

OO: The blocking force is less than 10 N/50 mm.

O: The blocking force is 10 to less than 30 N/50 mm.

Δ: The blocking force is 30 to less than 60 N/50 mm.

X: The blocking force is 60 N/50 mm or more.

### (7) Surface Touch Feeling of Polyolefin-Based Foam Sheet

The surface touch feeling of the polyolefin-based foam sheet was evaluated based on the following standards.

O: The polyolefin-based foam sheet surface is soft and smooth, and the surface touch feeling is good.

X: The polyolefin-based foam sheet surface is soft but is rough and the surface touch feeling is poor.

XX: The polyolefin-based foam sheet surface is hard and smoothness is poor.

### (8) Evaluation of Flexibility of Polyolefin-Based Foam Sheet

The polyolefin-based foam sheet was cut into a strip having a size of 100 mm length × 20 mm width and the strip was used as a test piece. The test piece was bent at the center of the test piece so as to hold a state in which the test piece was in contact with the upper and lower surfaces of a brass flat plate 1 (100 mm × 100 mm × 1 mm thickness) on a horizontal surface under an environment of 23°C. Next, a brass flat plate 2 (50 mm × 50 mm × 1 mm thickness) was overlapped with the brass flat plate immediately, and a weight was placed on the test piece so that the total load was 1 kgf. This state was held for 3 minutes and then the load was removed.

Next, the flexibility of the polyolefin-based foam sheet was evaluated based on the following standards.

O: No whitening, crevices or cracks was visually observed in the bent part.

X: Whitening, crevices or cracks was easily visually observed in the bent part.

### (9) Evaluation of Shape Retainability of Polyolefin-Based Foam Sheet

The polyolefin-based foam sheet was cut into a strip having a size of 100 mm length × 20 mm width and the strip was used as a test piece. The test piece was bent at the center of the test piece so as to hold a state in which the test piece was in contact with the upper and lower surfaces of a brass flat plate 1 (100 mm × 100 mm × 1 mm thickness) on a horizontal surface under an environment of 23°C. Next, a brass flat plate 2 (50 mm × 50 mm × 1 mm thickness) was overlapped with the brass flat plate 1 immediately, and a weight was placed on the test piece so that the total load was 9.8 N. This state was held for 3 minutes and then the load was removed.

In the process of returning the test piece to its original shape from immediately after the removal of the load, the time for the entire part of the bent half of the test piece to pass the vertical straight line was measured and the shape retainability of the polyolefin-based foam sheet was evaluated based on the following standards.

OO: The bent state (bending angle in a range of 0-90°) was maintained for 1 minute or longer.

O: The bent state (bending angle in a range of 0-90°) was maintained for 30 seconds to less than 1 minute.

Δ: The bent state (bending angle in a range of 0° to 90°) was maintained for 1 to less than 30 seconds.

X: The bent state (bending angle in a range of 0-90°) was not able to be maintained for 1 second or longer and returned to the original shape immediately.

### (10) Evaluation of Shape Followability of Polyolefin-Based Foam Sheet

A footwear insole was prepared using the obtained polyolefin-based foam sheet and placed in a shoe. Next, the obtained shoe was put on for 30 minutes and then the footwear insole was removed.

Next, the shape of the footwear insole was observed and the shape followability of the polyolefin-based foam sheet was evaluated based on the following standards.

O: The footwear insole followed the solid shape of the sole and was deformed.

X: The footwear insole was not deformed.

(11) Intrinsic Viscosity [ 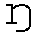 ] of 4-Methyl-1-Pentene-Based Polymer

The intrinsic viscosity [η] was measured at 135°C using a decalin solvent.

### (12) Composition of 4-Methyl-1-Pentene-Based Polymer

The contents of 4-methyl-1-pentene and α-olefin in the 4-methyl-1-pentene-based polymer were quantitatively determined from ¹³C-NMR.

### (13) Density of 4-Methyl-1-Pentene-Based Polymer

The density of the 4-methyl-1-pentene was calculated from the weight of each sample measured in water and air using an electronic densimeter MD-300S manufactured by ALFA MIRAGE Co., Ltd., according to ASTM D 1505 (water substitution).

### 2. Raw Materials

The raw materials used in Examples and Comparative Examples are shown below.

### (1) 4-Methyl-1-Pentene-Based Polymer

4-Methyl-1-pentene-based polymer 1: a copolymer of 4-methyl-1-pentene and propylene (content of constitutional unit derived from 4-methyl-1-pentene: 72 mol%, content of constitutional unit derived from propylene: 28 mol%, intrinsic viscosity [η]: 1.5 dL/g, density: 0.84 g/cm³)

### (2) Partially Crosslinkable Olefin-Based Elastomer

Density: 0.88 g/cm³, MILASTOMER 4010N, manufactured by Mitsui Chemical Co., Ltd.

### (3) Foamable Modified Resin

Foamable modified resin 1: styrene-based elastomer (density: 0.90 g/cm³, SEBS, Kraton G1657MS, manufactured by Kraton Polymer Japan Ltd.)
Foamable modified resin 2: maleic acid anhydride-modified styrene-based elastomer (density: 0.90 g/cm³, TUFTEC M1943, manufactured by Asahi Kasei Corporation)
Foamable modified resin 3: thermoplastic polyamide-based resin (density: 1.01 g/cm³, polyether block amide copolymer, PEBAX 2533 (SA01), manufactured by Arkema group)
Foamable modified resin 4: polypropylene (density: 0.91 g/cm³, propylene homopolymer, VP103W, manufactured by Prime Polymer Co., Ltd.)
Foamable modified resin 5: acrylic acid-modified polytetrafluoroethylene (density: 1.2 g/cm³, METABLEN A-3000, manufactured by MITSUBISHI RAYON Co., Ltd.)
Foamable modified resin 6: low density polyethylene (density: 0.92 g/cm³, NOVATEC LD YF30, manufactured by Japan polyethylene Corporation)

### (4) Foaming Agent

Foaming agent 1: sodium bicarbonate sodium citrate (P-4, manufactured by Otsuka Chemical Co., Ltd.)

### [Examples 1-19]

As a molding machine, an apparatus including a single screw extrusion molding machine (cylinder inner diameter D: 50 mm, full flight screw, when the screw effective length is L, L/D: 32 mm, carbon dioxide supply position: 17.5 D from screw supply part side), a T-die (die width: 320 mm, lip opening: 0.5-1.8 mm), a cooling roll (outer diameter: 50 mm, formed of steel subjected to mirror surface finish hard chrome plating surface treatment, water cooling type), a carbon dioxide supply device, a cooling roll, and a taking-over machine was used.

First, each raw material was dry-blended with formulation shown in Tables 1B and 2B (the unit in the tables is parts by mass) respectively, the obtained mixture was put into a hopper, and carbon dioxide was injected into the middle (position: 17.5 D) of the cylinder of the extrusion molding machine from the carbon dioxide supply device at a pressure of 10-23 MPa. At this time, the amount of carbon dioxide injected was adjusted to 0.1-0.8 mass% with respect to the extrusion amount. Each component material was melted and kneaded under the conditions of temperature of 100-230°C at each part of the cylinder and a screw rotation speed of 20-36 rpm, and the mixture was extruded from the T-die such that the extrusion amount was 5-8.5 kg/hour at a resin temperature of 130-195°C in the cylinder head part. The extruded foam sheet was cooled by the cooling roll (water temperature flowing in the roll: 30°C), and was taken over using the taking-over machine (taking-over speed: 0.4-2.3 m/min) to obtain polyolefin-based foam sheets 1-19 having a sheet width of about 300 mm respectively.

Each evaluation was performed on the obtained polyolefin-based foam sheets 1-19. The obtained results are shown in Tables 1B and 2B.

### [Comparative Examples 1 and 2]

As a molding machine, an apparatus including a single screw extrusion molding machine (cylinder inner diameter D: 50 mm, full flight screw, when the screw effective length is L, L/D: 32 mm), a T-die (die width: 320 mm, lip opening: 0.5 mm), a cooling roll (outer diameter: 50 mm, formed of steel subjected to mirror surface finish hard chrome plating surface treatment, water cooling type), a cooling roll, and a taking-over machine, which is the same as the molding machine in Examples 1-19 except not using the carbon dioxide supply device, was used.

First, each raw material was dry-blended with formulation shown in Table 2B (the unit in the table is parts by mass) respectively, and the obtained mixture was put into a hopper. Each component material was melted and kneaded under the conditions of temperature of 100-180°C at each part of the cylinder and a screw rotation speed of 20 rpm, and the mixture was extruded from the T-die such that the extrusion amount was 6-7 kg/hour at a resin temperature of 182-185°C in the cylinder head part. The extruded foam sheet was cooled by the cooling roll (water temperature flowing in the roll: 30°C), and was taken over using the taking-over machine to obtain polyolefin-based sheets 20 and 21 respectively.

Each evaluation was performed on the obtained polyolefin-based sheets 20 and 21. The obtained results are shown in Table 2B respectively.

The polyolefin-based sheets of Comparative Examples 1 and 2 had hard surfaces, poor smoothness, and poor blocking properties, and thus the evaluation of flexibility, shape retainability, and shape followability was not performed.

### [Comparative Example 3]

As a molding machine, an apparatus including a single screw extrusion molding machine (cylinder inner diameter D: 50 mm, full flight screw, when the screw effective length is L, L/D: 32 mm), a T-die (die width: 320 mm), a cooling roll (outer diameter: 50 mm, formed of steel subjected to mirror surface finish hard chrome plating surface treatment, water cooling type), a carbon dioxide supply device, a cooling roll, and a taking-over machine, which is the same as the molding machine in Examples 1-19 except that the lip opening is set to 1.05 mm, was used.

First, each raw material was dry-blended with formulation shown in Table 2B (the unit in the table is parts by mass) respectively, and the obtained mixture was put into a hopper. Each component material was melted and kneaded under the conditions of temperature of 180-200°C at each part of the cylinder and a screw rotation speed of 42 rpm, and the mixture was extruded from the T-die such that the extrusion amount was 11 kg/hour at a resin temperature of 207°C in the cylinder head part. The extruded foam sheet was cooled by the cooling roll (water temperature flowing in the roll: 30°C), and was taken over using the taking-over machine to obtain a polyolefin-based foam sheet 22.

Each evaluation was performed on the obtained polyolefin-based foam sheet 22. The obtained results are shown in Table 2B.

### [Comparative Example 4]

A polyolefin-based foam sheet 23 (polyethylene-based foam sheet, HI-SHEET, manufactured by Mistui Mitsui Chemicals, Inc.) was used and subjected to each evaluation. The obtained results are shown in Table 2B.

**[Table 1B]**

| | Raw material | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Composition [Parts by mass] | 4-Methyl-1-pentene-based polymer 1 | | 100 | 90 | 90 | 85 | 90 | 80 | 70 | 90 | 85 | 100 | 100 | 100 |
| | Foamable modified resin 1 | | | | 5 | 5 | | | | | | | | |
| | Foamable modified resin 2 | | | | | | 10 | 20 | 30 | | 5 | | | |
| | Foamable modified resin 3 | | | | | | | | | 10 | 10 | | | |
| | Foamable modified resin 4 | | | 10 | 5 | 10 | | | | | | | | |
| | Foamable modified resin 5 | | | | | | | | | | | 1 | 3 | 4 |
| | Foamable modified resin 6 | | | | | | | | | | | | | |
| | Foaming agent 1 | | 0.3 | 0.3 | 0.3 | 0.3 | 0.3 | 0.3 | 0.3 | 0.3 | 0.3 | 0.3 | 0.3 | 0.3 |
| Evaluation result | Melt tension [mN] | | Not measured | 50 | Not measured | Not measured | Not measured | 48 | Not measured | Not measured | 22 | 41 | 195 | Not measured |
| | Density of sheet [g/cm³] | | 0.53 | 0.48 | 0.47 | 0.49 | 0.51 | 0.52 | 0.55 | 0.51 | 0.59 | 0.53 | 0.54 | 0.56 |
| | Thickness of sheet [mm] | | 1.0 | 1.6 | 1.6 | 1.6 | 0.9 | 0.8 | 1.2 | 0.9 | 1.0 | 1.1 | 1.2 | 1.3 |
| | Shore A hardness | HS₀ | 66 | 63 | 66 | 70 | 73 | 64 | 54 | 54 | 64 | 67 | 72 | 68 |
| | | HS₁ | 24 | 29 | 25 | 35 | 22 | 20 | 19 | 16 | 21 | 22 | 26 | 24 |
| | | ΔHS | 42 | 34 | 41 | 35 | 51 | 44 | 35 | 38 | 43 | 45 | 46 | 44 |
| | Maximum peak height (Rp) [µm] | | 201 | 81 | 148 | 67 | 123 | 145 | 151 | 203 | 162 | 196 | 127 | 137 |
| | Temperature showing maximum value of tan δ [°C] | | 27 | 27 | 28 | 28 | 28 | 27 | 27 | 27 | 28 | 29 | 29 | 28 |
| | Maximum value of tan δ | | 2.3 | 1.5 | 1.5 | 1.3 | 2.3 | 2.2 | 1.9 | 2.0 | 2.3 | 2.6 | 2.1 | 1.9 |
| | Blocking properties | | ○○ | ○○ | ○○ | ○○ | ○○ | ○○ | ○○ | ○○ | ○○ | ○○ | ○○ | ○○ |
| | Surface touch | | × | ○ | ○ | ○ | ○ | ○ | ○ | × | ○ | × | ○ | ○ |
| | Flexibility | | ○ | ○ | ○ | ○ | ○ | ○ | ○ | ○ | ○ | ○ | ○ | ○ |
| | Shape retainability | | ○○ | ○○ | ○○ | ○○ | ○○ | ○○ | ○○ | ○○ | ○○ | ○○ | ○○ | ○○ |
| | Shape followability | | ○ | ○ | ○ | ○ | ○ | ○ | ○ | ○ | ○ | ○ | ○ | ○ |

**[Table 2B]**

| | Raw material | | Example 13 | Example 14 | Example 15 | Example 16 | Example 17 | Example 18 | Example 19 | Comparative Example 1 | Comparative Example 2 | Comparative Example 3 | Comparative Example 4 |
|---|---|---|---|---|---|---|---|---|---|---|---|---|---|
| Composition [Parts by mass] | 4-Methyl-1-pentene-base d polymer 1 | | 100 | 80 | 90 | 80 | 85 | 65 | 90 | 100 | 100 | | Polyethylene-bas ed foam sheet |
| | Partially crosslinkable olefin-based elastomer | | | | | | | | | | | 90 | |
| | Foamable modified resin 1 | | | 20 | | | | | | | | | |
| | Foamable modified resin 2 | | | | 10 | 20 | 5 | 5 | | | | | |
| | Foamable modified resin 3 | | | | | | 10 | 30 | | | | | |
| | Foamable modified resin 4 | | | | | | | | | | | 10 | |
| | Foamable modified resin 5 | | 5 | 3 | 3 | 3 | 3 | 3 | | | 3 | | |
| | Foamable modified resin 6 | | | | | | | | 10 | | | | |
| | Foaming agent 1 | | 0.3 | 0.3 | 0.3 | 0.3 | 0.3 | 0.3 | 0.3 | 0 | 0.3 | 0.3 | |
| Evaluation result | Melt tension [mN] | | 110 | Not measured | Not measured | 320 | 240 | Not measured | 35 | Not measured | Not measured | Not measured | Not measured |
| | Density of sheet [g/cm³] | | 0.55 | 0.43 | 0.50 | 0.49 | 0.51 | 0.54 | 0.61 | 0.84 | 0.84 | 0.41 | 0.33 |
| | Thickness of sheet [mm] | | 2.0 | 2.5 | 1.7 | 1.6 | 1.8 | 2.2 | 1.6 | 2.1 | 2.8 | 1.7 | 1.7 |
| | Shore A hardness | HS₀ | 77 | 71 | 65 | 65 | 66 | 67 | 68 | 86 | 91 | 37 | 64 |
| | | HS₁ | 29 | 22 | 18 | 19 | 23 | 29 | 24 | 57 | 66 | 30 | 60 |
| | | ΔHS | 48 | 49 | 47 | 46 | 43 | 38 | 44 | 29 | 25 | 7 | 4 |
| | Maximum peak height (Rp) [µm] | | 87 | 179 | 151 | 130 | 106 | 108 | 240 | 19 | 27 | 24 | 43 |
| | Temperature showing maximum value of tan δ [°C] | | 29 | 29 | 27 | 28 | 28 | 28 | 28 | 29 | 31 | None | None |
| | Maximum value of tan δ | | 2.2 | 2.0 | 1.9 | 1.8 | 1.8 | 1.3 | 1.9 | 2.6 | 2.1 | None | None |
| | Blocking properties | | OO | OO | OO | OO | OO | OO | OO | X | X | OO | OO |
| | Surface touch | | O | O | O | O | O | O | × | XX | XX | O | O |
| | Flexibility | | O | O | O | O | O | O | O | - | - | O | O |
| | Shape retainability | | OO | O | OO | O | OO | Δ | O | - | - | X | X |
| | Shape followability | | O | O | O | O | O | O | O | - | - | X | X |

As clearly seen from Tables 1B and 2B, it was found that the polyolefin-based foam sheets of Examples in which the ΔHS was 30-60 were excellent in performance balance of flexibility, shape retainability, and shape followability.

On the other hand, the polyolefin-based sheets of Comparative Examples 1 and 2 had hard surfaces, poor smoothness, and poor blocking properties. In addition, the polyolefin-based foam sheets of Comparative Examples 3 and 4 were excellent in flexibility but inferior in shape retainability and shape followability.

## Claims

1. An uncrosslinked foam body comprising a 4-methyl-1-pentene-based polymer including constitutional units derived from (i) 4-methyl-1-pentene and (ii) C₂₋₃- (α-olefin), with the content of the units (i) in the polymer being 10-90 mol%, based on the total of the units (i) and (ii),
wherein one or more temperatures showing a maximum value of loss tangent (tan δ), obtained by dynamic viscoelasticity measurement at a temperature increase rate of 4°C/min, a frequency of 1.59 Hz, and a distortion of 0.1%, exist in at least a range of 10-100°C, and the maximum value of the loss tangent is 0.5-3.5.

2. The foam body of claim 1 having a density of 0.10-0.80 g/cm³, determined by cutting out a test piece from a foam body and dividing the mass (g) of the test piece by the volume (cm³) obtained from the outer dimension of the test piece.

3. The foam body of claim 1 or 2, further comprising a vent hole communicating with the front and back sides of the foam body.

4. A foam sheet, which
- is an uncrosslinked sheet and
- is a polyolefin-based foam sheet comprising a 4-methyl-1-pentene-based polymer including constitutional units derived from (i) 4-methyl-1-pentene and (ii) C₂₋₃- (α-olefin) ,the content of the units (i) being 10-90 mol% based on the total of the units (i) and (ii);
wherein ΔHS expressed by (HS₀-HS₁) is 30-60, with HS₀ being the Shore A hardness of at least one surface of the polyolefin-based foam sheet immediately after measurement, measured according to JIS K6253 at 23°C, and HS₁ is the Shore A hardness 15 seconds after the measurement.

5. The foam sheet of claim 4, wherein the maximum peak height (Rp) of at least one surface of the polyolefin-based foam sheet, measured according to JIS B0601:2001, is ≤ 190 µm.

6. The foam sheet of claim 4 or 5, wherein the Shore A hardness (HS₀) of at least one surface of the polyolefin-based foam sheet immediately after measurement is ≤ 85, measured according to JIS K6253 at 23°C.

7. The foam sheet of any of claims 4-6, having a melt tension at 180°C of 10-1000 mN, determined by the method defined in the present description.

8. The foam sheet of any of claims 4-7, having a density of 0.10-0.80 g/cm³ determined by cutting out a test piece from a foam body and dividing the mass (g) of the test piece by the volume (cm³) obtained from the outer dimension of the test piece.

9. The foam sheet of any of claims 4-8, wherein one or more temperatures showing a maximum value of loss tangent (tan δ) of dynamic viscoelasticity exist in at least a range of 10-40°C, and the maximum value of the loss tangent is 0.8-3.

## Patentansprüche

1. Unvernetzter Schaumkörper, umfassend ein Polymer auf 4-Methyl-1-penten-Basis, einschließlich konstitutioneller Einheiten, abgeleitet von (i) 4-Methyl-1-penten und (ii) C₂₋₃-(α-Olefin), wobei der Gehalt der Einheiten (i) in dem Polymer 10-90 mol% beträgt, bezogen auf die Summe der Einheiten (i) und (ii), wobei mindestens in einem Bereich von 10-100°C eine oder mehrere Temperaturen existieren, die einen Maximalwert des Verlusttangens (tan δ) aufweisen, erhalten durch Messung der dynamischen Viskoelastizität bei einer Temperaturerhöhungsrate von 4 °C/min, einer Frequenz von 1,59 Hz und einer Verzerrung von 0,1 %, und der Maximalwert des Verlusttangens 0,5-3,5 ist.

2. Schaumkörper nach Anspruch 1, mit einer Dichte von 0,10-0,80 g/cm³, bestimmt durch Ausschneiden eines Prüfkörpers aus einem Schaumkörper und Dividieren der Masse (g) des Prüfkörpers durch das Volumen (cm³), das aus der Außenabmessung des Prüfkörpers erhalten wird.

3. Schaumkörper nach Anspruch 1 oder 2, weiter umfassend ein Belüftungsloch, das mit der Vorder- und Rückseite des Schaumkörpers in Verbindung steht.

4. Schaumfolie, die
- eine unvernetzte Folie ist, und
- eine Schaumfolie auf Polyolefinbasis ist, umfassend ein Polymer auf 4-Methyl-1-penten-Basis, einschließlich konstitutioneller Einheiten, abgeleitet von (i) 4-Methyl-1-penten und (ii) C₂₋₃-(α-Olefin), wobei der Gehalt der Einheiten (i) 10-90 mol % beträgt, bezogen auf die Summe der Einheiten (i) und (ii);
wobei das durch (HS₀-HS₁) ausgedrückte ΔHS 30-60 beträgt, wobei HS₀ die Shore-A-Härte von mindestens einer Oberfläche der Schaumfolie auf Polyolefinbasis unmittelbar nach der Messung bezeichnet, gemessen nach JIS K6253 bei 23 °C, und HS₁ die Shore-A-Härte 15 Sekunden nach der Messung ist.

5. Schaumfolie nach Anspruch 4, wobei die maximale Spitzenhöhe (Rp) von mindestens einer Oberfläche der Schaumfolie auf Polyolefinbasis, gemessen nach JIS B0601:2001, ≤ 190 µm ist.

6. Schaumfolie nach Anspruch 4 oder 5, wobei die Shore-A-Härte (HS₀) von mindestens einer Oberfläche der Schaumfolie auf Polyolefinbasis unmittelbar nach der Messung ≤ 85 ist, gemessen nach JIS K6253 bei 23 °C.

7. Schaumfolie nach einem der Ansprüche 4-6, mit einer Schmelzspannung bei 180 °C von 10-1000 mN, bestimmt durch das in der vorliegenden Beschreibung definierte Verfahren.

8. Schaumfolie nach einem der Ansprüche 4-7, mit einer Dichte von 0,10-0,80 g/cm³, bestimmt durch Ausschneiden eines Prüfkörpers aus einem Schaumkörper und Dividieren der Masse (g) des Prüfkörpers durch das Volumen (cm³), das aus der Außenabmessung des Prüfkörpers erhalten wird.

9. Schaumfolie nach einem der Ansprüche 4-8, wobei mindestens in einem Bereich von 10-40°C eine oder mehrere Temperaturen existieren, die einen Maximalwert des Verlusttangens (tan δ) der dynamischen Viskoelastizität aufweisen, und der Maximalwert des Verlusttangens 0,8-3 ist.

## Revendications

1. Corps en mousse non réticulé comprenant un polymère à base de 4-méthyl-1-pentène incluant des unités constitutionnelles dérivées de (i) 4-méthyl-1-pentène et de (ii) α-oléfine en C₂₋₃, la teneur des unités (i) dans le polymère étant de 10 % à 90 % en moles, par rapport au total des unités (i) et (ii), dans lequel une ou plusieurs températures montrant une valeur maximale de tangente de perte (tan δ), obtenue par mesure de la viscoélasticité dynamique à une vitesse de montée en température de 4 °C/min, une fréquence de 1,59 Hz et une distorsion de 0,1 %, existent dans au moins une plage allant de 10°C à 100°C, et la valeur maximale de la tangente de perte va de 0,5 à 3,5.

2. Corps en mousse selon la revendication 1 ayant une densité allant de 0,10 à 0,80 g/cm³, déterminée en découpant un échantillon à partir d'un corps en mousse et en divisant la masse (g) de l'échantillon par le volume (cm³) obtenu à partir de la dimension extérieure de l'échantillon.

3. Corps en mousse selon la revendication 1 ou la revendication 2, comprenant en outre un trou d'évent communiquant avec les faces avant et arrière du corps en mousse.

4. Feuille en mousse, qui
- est une feuille non réticulée, et
- est une feuille en mousse à base de polyoléfine comprenant un polymère à base de 4-méthyl-1-pentène incluant des unités constitutionnelles dérivées de (i) 4-méthyl-1-pentène et de (ii) α-oléfine en C₂₋₃, la teneur des unités (i) étant de 10 % à 90 % en moles par rapport au total des unités (i) et (ii) ;
dans laquelle ΔHS exprimé par (HS₀-HS₁) va de 30 à 60, HS₀ étant la dureté Shore A d'au moins une surface de la feuille en mousse à base de polyoléfine immédiatement après la mesure, mesurée selon JIS K6253 à 23 °C, et HS₁ étant la dureté Shore A 15 secondes après la mesure.

5. Feuille en mousse selon la revendication 4, dans laquelle la hauteur maximale de pic (Rp) d'au moins une surface de la feuille en mousse à base de polyoléfine, mesurée selon JIS B0601:2001, est ≤ 190 µm.

6. Feuille en mousse selon la revendication 4 ou la revendication 5, dans laquelle la dureté Shore A (HS₀) d'au moins une surface de la feuille en mousse à base de polyoléfine immédiatement après la mesure est ≤ 85, mesurée selon JIS K6253 à 23 °C.

7. Feuille en mousse selon l'une quelconque des revendications 4 à 6, ayant une tension à l'état fondu à 180 °C de 10 mN à 1000 mN, déterminée par le procédé défini dans la présente description.

8. Feuille en mousse selon l'une quelconque des revendications 4 à 7, ayant une densité allant de 0,10 à 0,80 g/cm³, déterminée en découpant un échantillon à partir d'un corps en mousse et en divisant la masse (g) de l'échantillon par le volume (cm³) obtenu à partir de la dimension extérieure de l'échantillon.

9. Feuille en mousse selon l'une quelconque des revendications 4 à 8, dans laquelle une ou plusieurs températures montrant une valeur maximale de tangente de perte (tan δ) de viscoélasticité dynamique existent dans au moins une plage allant de 10°C à 40°C, et la valeur maximale de la tangente de perte va de 0,8 à 3.
